(19) Europäisches Patentamt
European Patent Office
Office européen des brevets

(11) EP 1 691 237 A2

# (12) EUROPEAN PATENT APPLICATION

(43) Date of publication:
**16.08.2006 Bulletin 2006/33**

(21) Application number: **06003035.0**

(22) Date of filing: **15.02.2006**

(51) Int Cl.:
***G03C 7/30*** (2006.01) ***G03C 1/04*** (2006.01)
***G03C 1/06*** (2006.01) ***G03C 7/305*** (2006.01)
***G03H 1/04*** (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.02.2005 JP 2005037881**
**16.09.2005 JP 2005270278**

(71) Applicant: **FUJI PHOTO FILM CO., LTD.**
**Minami-Ashigara-shi, Kanagawa (JP)**

(72) Inventors:
- **Takizawa, Hiroo**
**Minami-Ashigara-shi, Kanagawa (JP)**
- **Suzuki, Hiroyuki**
**Minami-Ashigara-shi, Kanagawa (JP)**

(74) Representative: **HOFFMANN EITLE**
**Patent- und Rechtsanwälte**
**Arabellastrasse 4**
**81925 München (DE)**

## (54) Holographic recording material and holographic recording method

(57) A hologram recording material is provided and has at least a silver halide, an organic refractive index-modulating agent, and a binder. The silver halide undergoes sensitization in accordance with interference fringes caused by holographic exposure, to thus form a latent image. Thereafter the silver halide is subjected to a development process to thus develop the thus-sensitized silver halide, thereby causing reaction of the organic refractive index-modulating agent. Hence, the interference fringes formed by refractive index modulation are recorded.

EP 1 691 237 A2

## Description

Field of the Invention

The present invention relates to a hologram recording material which can be applied to three-dimensional display, a high-density optical recording medium (particularly for production of ROM), a holographic optical element, and the like, as well as to a hologram recording method.

Background of the Invention

The general principle about the preparation of hologram is described in various and technical books; e.g., Junpei Tsujiuchi, "Holographic Display," Sangyo Tosho, Chapter 2. According to these references, one of two coherent laser lights is radiated onto a target object of recording; and a photosensitive hologram recording material is placed at a position at which the material can receive a total reflection light from the object. The hologram recording material is also irradiated with, in addition to the light reflected from the target object, the other coherent light, which impinges directly onto the recording material without reflection off the target object. The light reflected from the target object is referred to as an object light; and the light irradiated directly onto the recording material is referred to as a reference light. Interference fringes formed by the reference light and the object light are recorded as image data. Subsequently, when the recording material, having undergone processing, is irradiated with the same light (reproducing illumination light) as the reference light, the hologram diffracts the light so as to reproduce a wave front of the light having arrived at the recording material first from the target object and reflected off the target object during recording. As a result, an object image substantially identical with the real image of the target object can be three-dimensionally observed.

The hologram formed by bringing a reference light and an object light incident on the hologram recording material from the same direction is referred to as a transmission hologram. In this case, interference fringes are formed at intervals of approximately 1,000 to 3,000 lines per mm in the direction perpendicular or substantially perpendicular to the surface of the recording material film.

Meanwhile, the hologram formed by bringing the lights incident on the hologram recording material from the opposite sides thereof is generally referred to as a reflection hologram. In this case, the interference fringes are formed at intervals of approximately 3,000 to 7,000 lines per mm in the direction parallel or substantially parallel to the surface of the recording material film.

The transmission hologram can be produced by a known method, such as that disclosed in JP-A-6-43634. The reflection hologram can be produced by a known method, such as that disclosed in JP-A-2-3082 or JP-A-3-50588.

Meanwhile, a hologram having a suffciently great thickness as compared with the spacing between interference fringes (the "sufficiently great thickness" referred to hereinin usually means the thickness of approximately five times the interference fringe spacing or greater, or approximately 1 $\mu$m or greater) is called a volume hologram.

On the other hand, a hologram having a thickness of five times or smaller the interference fringe spacing, or of about 1 $\mu$m or smaller, is called a flat hologram or a surface hologram.

Furthermore, a hologram which records interference fringes by means of absorption by a dye or silver is called as an amplification hologram; and a hologram which records interference fringes by means of surface relief or refractive index modulation is referred to as a phase hologram. The amplitude hologram undergoes significant degradation in diffraction efficiency or reflection efficiency of light, due to optical absorption. Hence, the amplitude hologram is less preferable in terms of efficiency of light, and the phase hologram is usually preferably employed.

The volume phase hologram can modulate the phase of light without absorbing the light, by means of forming a large number of interference fringes which differ in refractive index in a hologram recording material rather than by means of optical absorption.

Particularly, a reflection-type volume phase hologram, which is also referred to as a Lippmann hologram enables attainment of a full color hologram, reproduction of white color, and high resolution at a high diffraction efficiency by virtue of wavelength-selective reflection based on Bragg diffraction. Thus, this hologram enables provision of a high-resolution, full-color, three-dimensional display (imaging) hologram.

In addition, in recent years, this hologram has been widely put into practice in holographic optical elements (HOE), typified by an on-vehicle head up display (HUD), a pickup lens for an optical disk, a head mount display, a color filter for liquid crystal, and a reflection-type liquid crystal reflector, by making good use of its wavelength-selective reflection.

In addition to the above, studies are being conducted on practical use or application to a lens, a diffraction grating, an interference filter, a coupler for optical fiber, a polariscope for facsimile, window glass for construction, and the like.

Meanwhile, as part of the recent trend toward an advanced information society, networks, such as the Internet, and high definition televisions have become proliferate. In addition, with the start of HDTV (high definition television)

broadcasting approaching, demands for a high-density recording medium capable of readily and inexpensively recording image data of 100 GB or larger have been increased also for consumer applications.

Furthermore, in the trend toward high-capacity computers and the like, an ultrahigh-density recording medium capable of recording a large volume of data of about 1 TB or larger at a high speed and inexpensively has been required also for commercial uses, such as backup of computers, or backup for broadcast.

Under these circumstances, optical recording media that are replaceable, capable of random-access, small, and inexpensive have become a focus of attention, as opposed to magnetic tape media which are incapable of random access, and a hard disk which is non-replaceable and readily fails. However, physical principles limit the existing two-dimensional optical recording media, such as a DVD-R, to a maximum recording capacity of 25 GB per side even when its recording/reproduction wavelengths are reduced. Thus, the current situation is judged to be such that the two-dimensional optical recording media cannot be expected to have a recording capacity large enough to meet the future requirements.

To this end, a three-dimensional optical recording medium in which recording is performed in its thickness direction has become a focus of attention as an ultimate ultrahigh-density recording medium. Candidate methods for realizing the three-dimensional optical recording medium include a method employing a two-photon-absorptive material, and a method employing holography (interfercnce). Accordingly, the volume phase hologram recording material has recently become a keen focus of attention as a three-dimensional optical recording medium (holographic memory).

The holographic memory making use of a volume phase hologram recording material records a high volume of two-dimensional digital data (called "signal light") through use of a spatial light modulator (SLM), such as DMD and LCD, in place of object lights reflected from a three-dimensional object. Since the memory performs multiple-recording, such as angular multiplexing, phase multiplexing, wavelength multiplexing, and shift multiplexing, a recording capacity can be increased so as to reach even as large as 1 TB. A CCD, a CMOS, and the like, is usually employed for reading. When these devices write and read in parallel, a high transfer rate reaching even 1 Gbps can be attained.

Known volume phase hologram recording materials for use in the foregoing 3D display (imaging), the holographic optical element, the holographic memory, or the like, include those of a write-once type and those of a rewritable type. As the write-once type, dichromated gelatin, bleached silver halides, photopolymers, and the like, have been known; and as the rewritable type, photorefractive materials, photochromic high polymers, and the like, have been known.

However, none of these known volume phase hologram recording materials satisfies all the requirements, such as high resolution, high sensitivity, and high diffraction efficiency, as well as high storage stability, and the like; and improvement of such the material has been desired.

More specifically, for instance, dichromated gelatin has advantages of high diffraction efficiency and low noise. However, in view of having problems of extremely poor storage stability and poor sensitivity, this material is not appropriate for use in a 3D display, holographic memory, or the like.

The process of employing a bleached halide silver disclosed in, e.g., JP-A-10-149083, JP-A-10-149084, and JP-A-10-123643 is a method in which a silver halide photosensitive material undergoes holographic exposure and thereafter monochrome development; and the thus-developed silver is bleached to thus be restored to a silver halide. This process has an advantage of high sensitivity; however, it involves problems in that the bleaching processing is complicated, a strong oxidant is required, scattering is large, for the purpose of saving halide silver grains for refractive index modulation, and storage stability is degraded due to sensitization. Thus, also this method has many problems in application to the 3D display, the holographic optical element, the holographic memory, or the like.

Meanwhile, according to the dry processing employing a photopolymer disclosed in JP-A-6-43634, JP-A-2-3082 and JP-A-3-50588, a binder, a radical-polymerizable monomer, and a photopolymerization initiator are employed to form the elementary composition. In order to enhance refractive index modulation, this method has made a contrivance of imparting a refractive index difference to either the binder or the radical-polymerizable monomer by use of a compound including an aromatic ring, chlorine, or bromine. As a result, the polymerization proceeds while the monomer is concentrated to a bright region and the binder is concentrated to a dark region in the interference fringes which are formed during holographic exposure. Thus, diffractive index differences can be formed. Accordingly, this method can be said to be a relatively practical method that can realize both high diffraction efficiency and dry processing.

However, this process involves problems of having a sensitivity of about one thousandth that of the method based on the bleached silver halide, and requiring thermal fixation processing lasting about two hours so as to enhance diffraction efficiency. In addition, because of involving radical polymerization, this process suffers from effects of polymerization inhibition by oxygen. Furthermore, the recording material undergoes shrinkage after exposure and fixation, thereby changing the diffraction wavelength and angle at the time of reproduction; and, being a soft film, the material is also insufficient in view of storage stability.

Meanwhile, in application to a 3D display (imaging) or a holographic optical element, dry processing is not necessarily essential. In addition, also in application to holographic memory, particular in application to ROM (read only memory), dry processing is not necessarily essential; and development of a hologram recording material having high sensitivity and high productivity, as well as having high resolution, high diffraction efficiency, and high storage stability,

has been desired even when the material adopts wet processing.

As described above, development of a completely new recording method which provides a drastic solution to such problems, which particularly provides all of high sensitivity, high resolution, high diffraction efficiency, and high storage stability simultaneously, has been keenly desired so as to apply a hologram recording material to a 3D display (imaging), to a holographic optical element, holographic memory, or the like.

Summary of the Invention

An object of an illustrative, non-limiting embodiment of the invention is to provide a hologram recording material which can be applied to a mree-dimensional display (imaging), a high-density optical recording medium primarily for application to ROM, a holographic optical element, and the like, and which can simultaneously satisfy high resolution, high sensitivity, high diffraction efficiency, and high storage stability; as well as a hologram recording method.

As a result of extensive studies by the inventors, the object of the invention can be attained by the following means.

(1) A hologram recording material including at least a silver halide, an organic agent modulating a refractive index of the hologram recording material (hereinafter referred to as "an organic refractive index-modulating agent"), and a binder.

(2) The hologram recording material defined in (1), characterized in that the organic refractive index-modulating agent is any one of the following:

1) a coupler capable of modulating a refractive index thereof by means of a coupling reaction with an oxidized form of a developing agent during a development process (hereinafter referred to as "a refractive index-modulating coupler");
2) a compound-releasing agent capable of releasing a high refractive index compound or a low refractive index compound during a development process (hereinafter referred to as "a high (or low) refractive index compound-releasing agent");
3) a polymerizable compound capable of undergoing polymerization during a development process, thereby modulating a refractive index thereof; and
4) a bubble-generating agent capable of generating bubbles during a development process.

(3) The hologram recording material defined in (2), characterized in that the organic refractive index-modulating agent is 1) a refractive index-modulating coupler capable nf modulating a refractive index thereof by means of coupling reaction with an oxidized form of a developing agent during a development process, wherein the refractive index-modulating coupler is a compound represented by the following formula (1-1) or (1-2).

Formual (1-1)

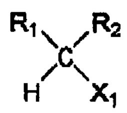

Formula (1-2)

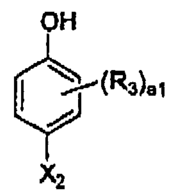

In formula (1-1), each of $R_1$ and $R_2$ independently represents a substituent, $R_1$ and $R_2$ may be linked together to thus form a ring, and $X_1$ represents a hydrogen atom or a leaving group which can depart as an anion upon coupling reaction with an oxidized form of a developing agent.

In formula (1-2), $R_3$ represents a substituent, and al is an integer from 0 to 4. When a1 is 2 or larger, the plurality of $R_3$'s may be the same or different from each other, and may be linked together to thus form a ring. $X_2$ represents a hydrogen atom or a leaving group which can depart as an anion upon coupling reaction with an oxidized form of a developing agent.

(4) The hologram recording material defined in (2) or (3), characterized in that the refractive index-modulating coupler is represented by formula (1-1).

(5) The hologram recording material defined in any one of (2) to (4), characterized in that the organic refractive index-modulating agent is 1) a refractive index-modulating coupler capable of modulating a refractive index thereof by means of coupling reaction with an oxidized form of a developing agent during a development process, and a

compound produced by the reaction with the oxidized form of the developing agent has no absorption at a hologram recording wavelength.

(6) The hologram recording material defined in any one of (3) to (5), characterized in that the leaving group $X_1$ in formula (1-1) or the leaving group $X_2$ in formula (1-2) is a group including a fluorine atom.

(7) The hologram recording method defined in any one of (2) to (6), characterized in that the developing agent is a reproduction agent which is represented by formula (4), and which itself is oxidized to reduce a silver halide into elemental silver during a development process; and that an oxidized form of the reduction agent can react with a refractive index-modulating coupler.

Formula (4)

$$X_7-(CR_9=CR_{10})_{a4}-X_8$$

In formula (4), each of $X_7$ and $X_8$ independently represents an -OH group or an $-NR_{17}R_{18}$ group, wherein $R_{17}$ and $R_{18}$ independently represents a hydrogen atom, an alkyl group, an alkenyl group, a cycloalkyl group, an aryl group, or a heterocyclic group. Each of $R_9$ and $R_{10}$ represents a hydrogen atom or a substituent, and $R_9$ and $R_{10}$ may be linked together to thus form a ring. a4 is an integer from 0 to 5. When a4 is 2 or larger, the plurality of $R_9$'s and $R_{10}$'s may be the same or different from each other.

(8) The hologram recording material defined in (7), characterized in that the developing agent is represented by formula (5).

Formula (5)

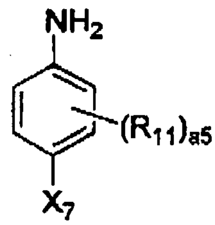

In formula (5), $X_7$ has the same meaning as in formula (4), $R_{11}$ represents a substituent, and a5 is an integer from 0 to 4. When a5 is 2 or larger, the plurality of $R_{11}$'s may be the same or different from each other, and may be linked together to thus form a ring.

(9) The hologram recording material defined in (2), characterized in that the organic refractive index-modulating agent is 2) a high (low) refractive index compound-releasing agent capable of releasing a high refractive index compound or a low refractive index compound during a development process; and the high (low) refractive index compound-releasing agent is represented by formula (2-1), (2-2), or (2-3).

Formula (2-1)

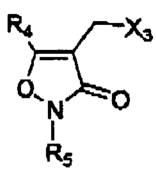

Formula (2-2)

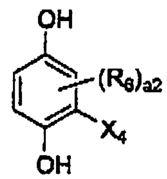

Formula (2-3)

$$X_5-(CR_7=CR_8)_{a3}-NHSO_2-X_6$$

In formula (2-1), $R_4$ represents an alkyl group, an alkenyl group, a cycloalkyl group, an aryl group, or a heterocyclic group; $R_5$ represents an aryl group or a heterocyclic group; and $X_3$ represents a releasing group to be released during the developing process.

In formula (2-2), $R_6$ represents a substituent, and a2 is an integer from 0 to 3. When a2 is 2 or larger, the plurality of $R_6$'s may be the same or different from each other, and may be linked together to thus form a ring. $X_4$ represents a releasing group to be released during the developing process.

In formula (2-3), each of $X_5$ and $X_6$ independently represents an -OH group or an -$NHR_{16}$ group, wherein $R_{16}$ represents a hydrogen atom, an alkyl group, an alkenyl group, a cycloalkyl group, an aryl group, or a heterocyclic group. $X_6$ represents a substituent, and $X_6$-$SO_2NH_2$ is released during the developing process. Each of $R_7$ and $R_8$ represents a hydrogen atom or a substituent, and $R_7$ and $R_8$ may be linked together to thus form a ring. a3 is an integer from 0 to 5; and, when a3 is 2 or larger, the plurality of $R_7$'s and $R_8$'s may be the same or different from each other.

(10) The hologram recording material defined in (2) or (9), characterized in that the high (low) refractive index compound-releasing agent is represented by formula (2-1); and a reduction agent is contained in the hologram recording material.

(11) The hologram recording material defined in (2) or (9), characterized in that the high (low) refractive index compound-releasing agent is represented by formula (2-2) or (2-3); and a nucleophilic reagent is contained in the hologram recording material or a developing solution.

(12) The hologram recording material defined in (2), characterized in that the organic refractive index-modulating agent is 3) a polymerizable compound capable of causing polymerization during a development process, thereby modulating a refractive index; and the polymerizable compound can attain recording of interference fringes by means of refractive index modulation by virtue of having a refractive index which differs from that of a binder.

(13) The hologram recording material defined in (2) or (12), further including a polymerization initiator in addition to the polymerizable compound defined in (2).

(14) The hologram recording material defined in (12) or (13), characterized in that the polymerizable compound is liquid.

(15) The hologram recording material defined in (2), characterized in that the organic refractive index-modulating agent is 4) a bubble-generating agent capable of generating bubbles during a development process; and gas generated by the bubble-generating agent is at least one of $N_2$, $CO_2$, $SO_2$, $SO_3$, $NO_2$, $O_2$ and i-$C_4H_8$.

(16) The hologram recording material defined in (2) or (15), characterized in that the bubble-generating agent is a compound represented by the following formula (3-1) or (3-2).

Formual (3-1)

$$R_{13}-G-R_{14}$$

Formula (3-2)

$$R_{15}-N\equiv \overset{+}{N} \qquad X_{11}^{-}$$

In formula (3-1), each of $R_{13}$ and $R_{14}$ independently represents a hydrogen atom or a substituent; and G represents -N=N-, -C(O)-, -OC(O)-, -OS(O)-, -$S(O)_2$-, or -$OS(O)_2$-. $R_{13}$ and $R_{14}$ may be linked together to thus form a ring. In formula (3-2), $R_{15}$ represents an aryl group or a heterocyclic group, and $X_{11}^-$ represents an anion.

(17) The hologram recording material defined in (16), characterized in that G represents -N=N-, -OC(O)-, -$S(O)_2$-, or -$OS(O)_2$- in the bubble-generating agent represented by formula (3-1).

(18) The hologram recording material defined in (16) or (17), characterized in that G represents -N=N- or -OC(O)- in the bubble-generating agent represented by formula (3-1).

(19) The hologram recording material defined in any one of (16) to (18), characterized in that each of $R_{13}$ and $R_{14}$ independently represents an alkyl group, an alkenyl group, a cycloalkyl group, an aryl group, a heterocyclic group, an alkoxy group, an aryloxy group, or an amino group in the bubble-generating agent represented by formula (3-1).

(20) The hologram recording material defined in any one of (1) to (19), characterized in that the silver halide has undergone spectral sensitization in the visible light region through adsorption of a sensitizing dye.

(21) The hologram recording material defined in (20), characterized in that the sensitizing dye is a cyanine dye or a merocyanine dye.

(22) The hologram recording material defined in (20) or (21), characterized in that the sensitizing dye is adsorbed onto the silver halide in a j-aggregating state.

(23) The hologram recording material defined in any one of (1) to (22), characterized in that a number-average equivalent circular diameter of the silver halide falls within a range of 10 to 80 nm.

(24) The hologram recording material defined in any one of (1) to (23), characterized in that a number-average equivalent circular diameter of the silver halide falls within a range of 10 to 50 nm.

(25) The hologram recording material defined in any one of (1) to (24), further including a light-shielding filter capable of filtering out a part nf the ultraviolet, visible, and infrared wavelength region other than the wavelength of a recording light and a reproducing light on the surface of the hologram recording material, the back surface thereof, or both.

(26) A hologram recording method characterized by using the hologram recording material defined in any one of (1) to (25), and including

a step of sensitizing the silver halide in accordance with interference fringes caused by holographic exposure, to

thus form a latent image; and
a step of subjecting the hologram recording material so that the organic refractive index-modulating agent modulate a refractive index thereof to form (or record) the interference fringes.
(27) The hologram recording method defined in (26), which comprises
a step of bleaching silver that has been developed and is present in the hologram recording material during or after the development process; and
a step of desilvering the hologram recording material to recover the silver together with remaining silver halide into a processing solution.
(28) A hologram recording method characterized by performing volume phase hologram recording by using the hologram recording material defined in any one of (1) to (25) or the hologram recording method defined in (26) or (27).
(29) The hologram recording method defined in any one of (26) to (28), characterized in that the hologram recording is of a non-rewritable type.
(30) The hologram recording method defined in any one of (26) to (29), characterized in that the developing agent is contained in the developing solution.
(31) The hologram recording method defined in any one of (26) to (30), characterized by performing multiple-recording by subjecting the hologram recording material to holographic exposure (holographic operation) 10 times or more.
(32) The hologram recording method defined in (31), characterized by performing multiple-recording by subjecting the hologram recording material to holographic exposure 50 times or more.
(33) The hologram recording method defined in (32), characterized by performing multiple-recording by subjecting the hologram recording material to holographic exposure 100 times or more.
(34) The hologram recording method defined in any one of (31) to (33), characterized in that the multiple-recording is performed under a common exposure amount in each holographic exposure.
(35) An optical recording medium employing the hologram recording material defined in any one of (1) to (25) or the hologram recording method defined in any one of (26) to (34), as well as a recording method for the optical recording medium.
(36) The optical recording medium defined in (35), characterized in that the optical recording medium defined in (35) is a ROM optical recording medium, as well as a recording method for the optical recording medium.
(37) An optical recording medium characterized by being configured such that the hologram recording material defined in any one of (1) to (25) is stored in a light-shielding cartridge during a storage period.
(38) A three-dimensional display hologram employing the hologram recording material defined in any one of (1) to (25) or the hologram recording method defined in any one of (26) to (34), as well as a method for producing the three-dimensional display hologram.
(39) A holographic optical element employing the hologram recording material defined in any one of (1) to (25) or the hologram recording method defined in any one of claims (26) to (34), as well as a manufacturing method for the holographic optical element.

The present invention can provide a hologram recording material which can be applied to a three-dimensional display (imaging), a high-density optical recording medium primarily for application to ROM, a holographic optical element, and the like, and which can have high resolution, high sensitivity, high diffraction efficiency, and high storage stability; as well as a hologram recording method.

Brief Description of the Drawings

Fig. 1 is a schematic view illustrating formation of interference fringes when an organic refractive index-modulating agent is used;
Fig. 2 is a schematic view illustrating formation of interference fringes when a bubble-generating agent is used; and
Fig. 3 is a schematic view describing a two-light optical system for holographic exposure.

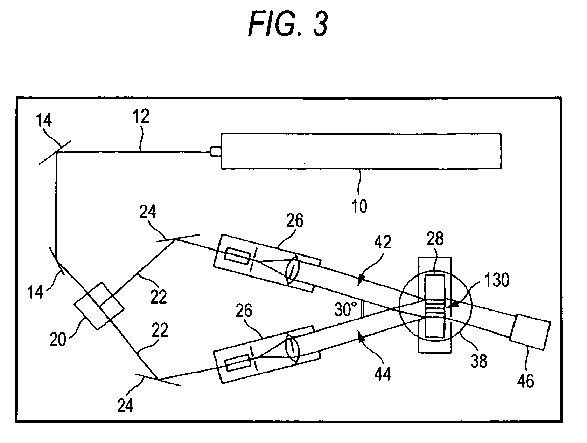

Reference numerals and signs in Fig. 3 are set forth below.

10 YAG LASER
12 LASER BEAM
14 MIRROR
20 BEAM SPLITTER
22 BEAM SEGMENT

24 MIRROR
26 SPATIAL FILTER
28 SAMPLE
30 HOLOGRAM RECORDING MATERIAL
38 ROTARY STAGE
40 BEAM EXPANDER
42 OBJECT LIGHT
44 REFERENCE LIGHT
46 SENSOR

Summary of the Invention

Exemplary embodiments of hologram recording material and a hologram recording method of the invention will now be described in detail.

A hologram recording material of the invention includes at least a silver halide, an organic refractive index-modulating agent, and a binder.

A hologram recording method of the invention is such a hologram recording method that a latent image is formed on a hologram recording material—which includes at least a silver halide, an organic refractive index-modulating agent, and a binder—by means of sensitizing the silver halide in accordance with interference fringes caused by holographic exposure; and thereafter the material undergoes a development process. The thus-sensitized silver halide is subjected to development, thereby causing reaction of the organic refractive index-modulating agent. Hence, the interference fringes formed by refractive index modulation are recorded.

The hologram recording method of the invention is more preferably a hologram recording method according to which silver present in a hologram recording material is bleached during development process or after the same, and furthermore, the hologram recording material is desilvered, and the silver and a remaining silver halide recovered into a processing solution.

First, a silver halide in the hologram recording material of the present invention will be described.

The silver-halide-containing hologram recording material of the invention contains a silver halide, which is preferably used in the form of a silver halide emulsion, and more preferably used in the form of a substrate having thereon at least a single silver emulsion halide layer.

As the substrate, a substrate usually employed for the silver halide photosensitive material can be employed. Representative examples of the substrate include glass, TAC, PET, and PEN. Glass or TAC, which has no optical anisotropy, is preferably employed. The thickness of the substrate can be arbitrarily selected in accordance with its application and method of use. The substrate is coated with the above-described emulsion layer. In addition to the emulsion layer, a protection layer, a yellow filter (YF) layer, an intermediate layer, an antihalation layer, an undercoating layer, a backing layer, and the like, can be selectively applied in accordance with the purpose. Application of a backing layer onto a flexible substrate of, e.g., TAC, is extremely effective for maintaining its favorable curling characteristic. In addition, when a protection layer is not provided, adhesion among samples can be improved by means of adopting a matting agent, or the like, to the backing layer. In addition, various problems, such as adhesion of dust, which may otherwise be caused by electrostatic, can be positively removed through adjustment of an electrostatic property.

No specific limitation is imposed on the amount of silver to be applied for coating on the silver halide emulsion layer and the various layers, or on the amount of a coating binder (preferably gelatin). The amount of silver to be applied preferably falls within a range of 1 to 10 $g/m^2$. The amount of binder (preferably gelatin) to be applied preferably falls within a range of 0.1 to 10 $g/m^2$. A coating amount ratio of silver/gelatin can also be selected from an arbitrary range, and preferably falls within a range of 0.3 to 2.0. The coating thickness usually preferably falls within a range of 3 to 12 $\mu$m. When the coating thickness is thin, sufficient recording of interference waves is inhibited; on the other hand, when the same is too thick, resolution is degraded by an increase of optical scattering, or the like. A swelling thickness during the course of processing can be arbitrarily selected through adjustment of the amount of a hardener to be employed. The degree of hardening is preferably high enough so as to prevent the thickness from being changed after processing; that is, to prevent detachment of the silver halide, the gelatin, and the like.

Silver halide grains contained in the silver halide emulsion layer of the invention are preferably regular crystals, and can have an octahedral, a cubic, or a tetradecahedral shape, or any of these shapes having rounded corners. The shape is preferably a rounded cube or a square-cornered cube. Twin crystals are preferably not mixed in. A number ratio of twin crystal grains is particularly preferably 3% or smaller; still further preferably 1% or smaller. The twin crystals referred to hereinin include a single twin, a double twin, and a multiple twin, as well as a parallel twin and a nonparallel twin.

The silver halide grains of the invention are preferably mono-dispersive. The variation coefficient of the equivalent circular diameters obtained by conversion from projected areas of all of the silver halide grains is preferably 25% or less, more preferably 20% or less, particularly preferably 15% or less. The variation coefficient of the equivalent

circular diameters referred to hereinin means a value obtained by dividing the standard deviation of the distribution of equivalent circular diameters of the respective silver halide grains by a mean equivalent circular diameter.

The equivalent circular diameter can be obtained by means of, e.g., capturing a transmission electron micrograph by a direct method, thereby obtaining a diameter (the equivalent circular diameter) of a circle which has the same area as the projected area of each grain on the micrograph. The silver halide grains of the present invention are ultrafine grains. Therefore, clear grain images can be obtained by means of photographing the same at a low temperature by means of high-voltage electron microscopy.

The silver halide grains of the invention are preferably silver bromide, silver iodobromide, silver chloroiodobromide, or silver chlorobromide. The silver iodide content is preferably 1 to 5 mol %. The silver chloride content is particularly preferably 5 mol % or less. Meanwhile, each of the grains preferably has uniform distribution of silver chloride or silver iodide. The variation coefficient of inter-grain distribution of the silver chloride or the silver iodide content is preferably 20% or less, particularly preferably 10% or less. An EPMA (electron probe micro analysis) is usually effective for measurement of the silver chloride and silver iodide content in each of the grains. Elemental analysis of an ultra-micro region of a sample irradiated with electron lights can be carried out by means of preparing the sample in which emulsion grains are dispersed in a non-contacting manner, irradiating the sample with electron lights, and analyzing X-rays emitted therefrom. At this time, measurement is preferably carried out while cooling the sample to a low temperature so as to prevent damage by the electron light.

Since the silver halide grains of the invention are ultrafine grains, imparting the grains with the structure of the halogen composition cannot be attained easily. However, a structure having a high silver iodide content, a structure having a high silver iodide content, and the like, can be imparted to the silver halide grains. The same also applies to the structure of silver chloride. Furthermore, a multilayer structure of three or more layers is also feasible.

The silver halide grains of the invention are 10 to 80 nm in a number-average equivalent circular diameter, more preferably 10 to 50 nm. Generally, when the grain size is too large, image quality in wavefront reconstruction is degraded; in contrast, when the same is too small, complete suppression of destabilization, such as variation of grain size, encounters difficulty.

The silver halide grains of the invention can be prepared by a conventionally known method. A preferable method is to add an aqueous solution of silver nitrate and an aqueous solution of a halogen into an aqueous solution of gelatin by means of double-jet method. At this time, addition is preferably performed while flow rate is accelerated. In addition, pH and pAg in the system during the course of the addition are preferably controlled. In this case, pH preferably falls within a range of 5 to 8; and pAg preferably falls within a range of 5 to 9. For preparation of the ultrafine grains, the temperature is preferably at a low level, and particularly preferably falls within a range of 20 to 40°C. Various additives, to be described later, can be added for adjustment of grain size, grain size distribution, sensitivity/fog, gradation/progress of development, and the like.

Chemical sensitization is applied to the silver halide emulsion employed in the invention. In particular, gold-chalcogen sensitization and reduction sensitization are applied to the emulsion at the time of the chemical sensitization. The chemical sensitization referred to herein means a process which corresponds to a chemical sensitization step in a process for manufacturing a silver halide emulsion, in a case where the manufacturing process is divided into three steps constituted of a grain formation step, a rinse process, and the chemical sensitization step with elapse of time. The chemical sensitization is a step in which the temperature is increased by means of addition of various chemical sensitizers, to thus attain ripening.

Combined use of gold-chalcogen sensitization and reduction sensitization during the chemical sensitization has conventionally been considered difficult. However, this combined use is available within the grain size range of the present invention. By virtue of this combined use, an extremely high sensitivity can be attained, and storage stability can also be brought to a level at which no problem arises in practical use. Chalcogen sensitization and noble metal sensitization are described in detail in "The Theory of the Photographic Process, 4th edition," T. H. James, Macmillan, 1997, pages 67 to 76. Alternatively, there can be employed any of a plurality of combinations of a chalcogen sensitizer of sulfur, selenium, or tellurium, and a gold sensitizer, or, in addition to that, platinum, palladium, or iridium, or a sensitizer thereof, at a pAg of 5 to 10, a pH of 5 to 8, and a temperature of 30 to 80°C, as described in "Research Disclosure," vol. 120, April 1974, 12008; "Research Disclosure," vol. 34, June 1975, 13452; U.S. Pat Nos.2,642,361, 3,297,446, 3,712,031, 3,857,711, 3,901,714, 4,266,018, and 3,904,415, and British Patent No.1 315 755. In the case of gold sensitization, a known compound, such as chloroauric acid, potassium chloroaurate, potassium aurithiocyanate, gold sulfide, or gold selenide, can be employed. The palladium compound means a divalent salt or a tetravalent salt of palladium. Preferable palladium compounds are represented by $R_2PdX_6$ or $R_2PdX_4$, wherein R represents a hydrogen atom, an alkali metal atom, or an ammonium group; and X represents a halogen atom; more specifically, a chlorine atom, a bromine atom, or an iodine atom.

More specifically, $K_2PdCl_4$, $(NH_4)_2PdCl_6$, $Na_2PdCl_4$, $(NH_4)_2PdCl_4$, $Li_2PdCl_4$, $Na_2PdCl_6$, or $K_2PdBr_4$ is preferable. A gold compound and a palladium compound are preferably used in combination with a thiocyanate or a selenocyanate.

As the sulfur sensitizer, hypo, a thiourea-based compound, a rhodanine-based compound, and a sulfur-containing compound described in U.S. Pat, Nos.3,857,711, 4,266,018, and 4,054,457 can be employed. Chemical sensitization can be carried out in the presence of a so-called chemical sensitization auxiliary. As a useful chemical sensitization auxiliary, there is employed a compound, such as azaindene, azapyridazine, or azapyrimidine, that is known to suppress fogging as well as to increase sensitivity in the process of chemical sensitization. Examples of a chemical sensitization auxiliary modifier are described in U.S. Pat. Nos.2,131,038, 3,411,914, and 3,554,757, JP-A-58-126526, and "Photographic Emulsion Chemistry," Duffin, pages 138 to 143.

The preferable amount of the gold sensitizer is $1 \times 10^{-6}$ to $1 \times 10^{-2}$ mol, more preferably $1 \times 10^{-5}$ to $5 \times 10^{-3}$ mol per mol of silver halide. The preferable range for the palladium compound is $1 \times 10^{-3}$ to $5 \times 10^{-7}$ mol per mol of silver halide. The preferable range for the thiocyan compound or the selenocyan compound is $1 \times 10^{-4}$ to $1 \times 10^{-2}$ mol per mol of silver halide.

The preferable amount of a sulfur sensitizer to be used for the silver halide grains employed in the invention is $1 \times 10^{-6}$ to $I \times 10^{-2}$ mol, more preferably $1 \times 10^{-5}$ to $5 \times 10^{-3}$ mol per mol of the silver halide.

Selenium sensitization is included in preferable chalcogen sensitization methods for the emulsion of the present invention. In the selenium sensitization, a known unstable selenium compound is employed. Specific examples of such a selenium compound include colloidal metal seleniums, selenoureas (e.g., N,N-dimethylselenourea and tetramethylselenourea), selenoketones, and selenoamides. The chalcogen sensitization (preferably the selenium sensitization) is preferably used in combination with the sulfur sensitization.

The tellurium sensitization adopts an unstable tellurium compound; and an unstable tellurium compound described in TP-A-4-224595, JP-A-4-271341, JP-A-4-333043, JP-A-5-303157, JP-A-6-27573, IP-A-6-175258, JP-A-6-180478, JP-A-6-208184, JP-A-6-208186, JP-A-6-317867, JP-A-7-140579, IP-A-7-301879, JP-A-7-301880, or the like, can be employed.

Specific examples of the compound include: phosphine tellurides (e.g., n-butyl-diisopropylphosphine telluride, triisebutylphosphine telluride, tri-n-butoxyphosphine terlluride, and triisopropylphosphine telluride), diacyl(di)tellurides (e.g., bis(diphenylcarbamoyl)ditelluride, bis(N-phenyl-N-methylcarbamoyl)ditelluride, bis(N-phenyl-N-methylcarbamoyl) telluride, bis(N-phenyl-N-benzylcarbamoyl)telluride, bis(ethoxycarbonyl)telluride)), telluroureas (e.g., N,N'-dimethylethylenetellurourea), telluroamides, and telluroesters. Preferably, a phosphine telluride or a diacyl(di)telluride is employed.

The silver halide emulsion of the invention also preferably undergoes reduction sensitization during chemical sensitization in addition to the gold-chalcogen sensitization. With regard to the reduction sensitization, a method therefor can be selected from: a method of adding a reduction sensitizer to a silver halide emulsion; a method, called as silver ripening, of ripening the emulsion in an atmosphere of a low pAg level where pAg is 1 to 7; and a method, called high-pH ripening, of ripening the emulsion in an atmosphere of a high pH level where pH is 8 to 11. Alternatively, two or more methods can be employed in combination.

The method of adding a reduction sensitizer is preferable, in that this method can finely adjust the level of reduction sensitization.

Examples of known reduction sensitizers include stannous salts, ascorbic acid and derivatives thereof, amines and polyamines, hydrazine derivatives, formamidinesulfinic acid, silane compounds, and borane compounds. A reduction sensitizer selected from the above known reduction sensitizers can be used in the reduction sensitization; alternatively, two or more compounds can be used in combination. Stannous chloride, thiourea dioxide, dimethylaminoborane, ascorbic acid, or any of derivatives thereof is a preferable compound as the reduction sensitizer. The amount of the reduction sensitizer to be added must be selected in view of preparation conditions of the emulsion. However, the appropriate range is a range of $10^{-7}$ to $10^{-3}$ mol per mol of silver halide.

The reduction sensitizer is added in the form of, e.g., a solution in water or an organic solvent during the course of the chemical sensitization. Examples of the organic solvent include alcohols, glycols, ketones, esters, and amides. The reduction sensitizer may be added either before or after addition of a gold sensitizer and a chalcogen sensitizer. Preferably, the reduction sensitizer is added to cause the emulsion to ripe, which is followed by addition of a chalcogen sensitizer and a gold sensitizer for further causing the emulsion to ripe, thereby terminating the chemical sensitization step. Alternatively, the solution of the reduction sensitizer may preferably be either divided and added a plurality of times, or continuously added over a long period of time.

In the invention, a tetrazaindene compound is preferably contained in an amount of $3 \times 10^{-3}$ to $3 \times 10^{-2}$ mol per mol of silver of the silver halide grains. The tetrazaindene compound employed in the invention is known as a stabilizer of a photographic emulsion and an antifoggant, and are described in "Research Disclosure," Vol. 307, page 866. As the tetrazaindene compound to be employed in the invention, that having a hydroxy group as its substituent is preferable; and a hydroxy tetrazaindene compound is particularly preferable. The heterocyclic ring of a tetrazaindene may have a substituent other than a hydroxy group. As the substituent, a tetrazaindene may have, e.g., an alkyl group, an amino group, a hydroxy amino group, an alkylamino group, a dialkylamino group, an arylamino group, a carboxy group, an alkoxycarbonyl group, a halogen atom, an acylamino group, or a cyano group. However, a substituent containing sulfur (e.g., a mercapto group) is less preferable.

Specific examples of the tetrazaindene compound of the invention are listed below. However, the compound is not limited thereto:

4-hydroxy-6-methyl-1,3,3a,7-tetrazaindene;
4-hydroxy-6-t-butyl-1,3,3a,7-tetrazaindene;
4-hydroxy-6-phenyl-1,3,3a,7-tetrazaindene;
4-hydroxy-1,3,3a,7-tetrazaindene;
4-methyl-6-hydroxy-1,3,3a,7-tetrazaindene;
2-methylthio-4-hydroxy-6-methyl-1,3,3a,7-tetrazaindene;
4-hydroxy-5-brom-6-methyl-1,3,3a,7-tetrazaindene;
4-hydroxy-6-methyl-1,2,3a,7-tetrazaindene;
4-hydroxy-6-ethyl-1,2,3a,7-tetrazaindene;
10,2,4-dihydroxy-6-phenyl-l,3,3a,7-aiazaindene; and
11,4-hydroxy-6-phenyl-1,2,3,3a,7-pentazaindene

The amount of each of the tetrazaindene compounds to be added preferably falls within a range of $3 \times 10^{-3}$ to $3 \times 10^{-2}$ mol per mol of silver halide, more preferably $4 \times 10^{-3}$ to $3\times 10^{-2}$ mol, further preferably $6 \times 10^{-3}$ to $2 \times 10^{-2}$ mol. The tetrazaindene compound is preferably added at any timing among before, during, and after the chemical sensitization, and during application of the coating. When the tetrazaindene compound is added in an insufficient amount, the addition exerts no effect on stabilization of a time-varying change of the grain size, which is to be yielded by the addition. The term "elapse of time" referred to herein means a lapse of time during preparation of silver halide emulsion grains, or during a period from completion of preparation until application of coating. By means of suppressing the time-varying change, stable manufacturing and quality can be attained. In contrast, when the tetrazaindene compound is added in an excessive amount, grain size varies greatly with time as compared with a case where the compound is not added.

In the invention, thiocyanate is preferably contained in an amount of $1 \times 10^{-4}$ to $1 \times 10^{-2}$ mol per mol of silver of the silver halide grains. Thiocyanate is more preferably contained in an amount of $5 \times 10^{-4}$ to $5 \times 10^{-3}$ mol per mol of silver of silver halide grains. When the amount is excessively small, the effect of sensitivity enhancement becomes small. In contrast, when the amount is excessively large, deterioration attributable to destabilization, such as changes in grain size of thiocyanate serving as a silver halide solvent, becomes excessive. In the invention, a silver halide solvent other than thiocyanates are also preferably employed. Examples of the silver halide solvent include: (a) organic thioethers described in U.S. Pat. Nos.3,271,157, 3,531,286, and 3,574,628, JP-A-54-1019, JP-A-54-158917, and the like; (b) thiourea derivatives described in JP-A-53-82408, JP-A-55-77737, JP-A-55-2982, and the like; (c) silver halide solvents having a thiocarbonyl group interposed between an oxygen or sulfur atom and a nitrogen atom, described in JP-A-53-144319; (d) imidazoles described in JP-A-54-100717; (e) sulfites; and (f) ammonia.

In the invention, the thiocyanate may be added at any timing during the course of preparation of the silver halide emulsion grains. However, the thiocyanate is preferably added after a formation step of the silver halide grains, more preferably between a desalting step and a coating step, particularly preferably during the chemical sensitization step. The thiocyanate is preferably added in the form of an aqueous solution. The thiocyanate is preferably KSCN, NaSCN, or $NH_4SCN$.

The silver halide preferably undergoes visible light spectrum sensitization through adsorption by a sensitizing dye.

In the invention, a j-aggregating cyanine dye, serving as the sensitizing dye, is preferably contained in an amount of $1 \times 10^{-4}$ to $1 \times 10^{-2}$ mol per mol of silver of the silver halide grains. When the j-aggregating cyanine dye is contained in this amount, the destabilizing effects on the silver halide ultrafine grains resulting from employment of the foregoing silver halide solvent can be greatly suppressed. The term "j-aggregating" referred to herein means such a characteristic that, in a state where the dye is adsorbed onto the silver halide grains, the absorption maximum of the dye in a solution shifts to a longer wavelength preferably by 10 nm or more and more preferably 20 nm or more. The j-aggregating cyanine dye is particularly preferably contained in an amount of $5 \times 10^{-4}$ to $5 \times 10^{-3}$ mol per mol of silver of the silver halide grains.

General examples of the sensitizing dye employed in the invention include cyanine dyes, merocyanine dyes, composite cyanine dyes, composite merocyanine dyes, holopolar cyanine dyes, hemicyanine dyes, styryl dyes, and hemioxonol dyes. Particularly useful dyes among the above are cyanine dyes and the merocyanine dyes. Further preferably, the sensitizing dye is adsorbed onto the silver halide in the j-aggregating state.

These dyes may adopt any nuclei usually utilized in cyanine dyes as basic heterocyclic nuclei. More specifically, there can be employed, for instance, any of a pyrroline nucleus, an oxazoline nucleus, a thiazoline nucleus, a pynole nucleus, an oxazole nucleus, a thiazole nucleus, a selenazole nucleus, an imidazole nucleus, a tetrazole nucleus, and a pyridine nucleus; a nucleus formed by fusing an cycloaliphatic hydrocarbon ring to any of these nuclei; and a nucleus

formed by fusing an aromatic hydrocarbon ring to any of these nuclei, such as an indolenine nucleus, a benzindolenine nucleus, an indole nucleus, a benxoxazole nucleus, a naphthooxazole nucleus, a benzothiazole nucleus, a naphthothiazole nucleus, a benzoselenazole nucleus, a benzimidazole nucleus, or a quinoline nucleus. Each of these nuclei may have a substituent on a carbon atom thereof.

These sensitizing dyes may be used either singly or in combination. A combination of the sensitizing dyes is often employed for the purpose of supersonsitization. Representative examples thereof are described in U.S. Pat. Nos. 2,688,545, 2,977,229, 3,397,060, 3,522,052, 3,527,641, 3,617,293, 3,628,964, 3,666,480, 3,672,898, 3,679,428, 3,703,377, 3,769,301, 3,814,609, 3,837,862, and 4,026,707, British Patent Nos.1,344,281 and 1,507,803, JP-B-43-4936, JP-B-53-12375, JP-A-52-110618, and JP-A-52-109925.

A dye which itself has no sensitization effect, or a substance which absorbs substantially no visible light but exhibits supersensitization, may be added, simultaneously or independently, in combination with the sensitizing dye. In the present invention, a slilbene-based supersentisizing agent is particularly preferably employed.

In the invention, the sensitizing dye may be added at any timing during the course of preparation of the silver halide emulsion grains. However, the sensitizing dye is preferably added during or prior to the chemical sensitization step, more preferably at any time after completion of the formation step of the silver halide grains and before or during the desalting step. The sensitizing dye can be added in accordance with a conventionally known method, and is preferably added in the form of an aqueous solution or an aqueous dispersion.

The transmittance of light having the recording wavelength through the hologram recording material preferably falls within a range of 10 to 99%, more preferably 20 to 95%, further preferably 30 to 90%, most preferably 40 to 85%, from the viewpoint of diffraction efficiency, sensitivity, and recording density (multiplicity). Therefore, in order to achieve the above, the amount of the silver halide to be added, the molar absorption coefficient, and the amount of adsorption of the sensitizing dye—to be adsorbed onto the silver halide—at the recording wavelength are preferably adjusted in accordance with the thickness of the hologram recording material.

In the invention, an iridium salt is preferably contained in an amount of $1 \times 10^{-4}$ to $1 \times 10^{-2}$ mol per mol of silver of the silver halide grains. When the iridium salt is contained in this amount, the destabilizing effects on the silver halide ultrafine grains due to employment of the foregoing silver halide solvent can be greatly suppressed. The iridium salt is particularly preferably contained in an amount of $2 \times 10^{-4}$ to $1 \times 10^{-3}$ mol per mol of silver of the silver halide grains.

In the invention, the iridium salt may be added at any timing during the course of preparation of the silver halide emulsion grains. However, the iridium salt is preferably added during the formation step of the silver halide grains. The iridium salt is preferably added in the form of an aqueous solution.

As the iridium salt, a complex of trivalent or tetravalent iridium is preferably employed. Representative examples of the iridium salt include $K_3IrCL_6$, $K_2IrCL_6$, $K_3IrCL_5(H_2O)$, and $K_2IrCL_5(H_2O)$. In addition to the potassium salts, sodium salts and ammonium salts are also preferably employed. Examples of the ligand of Ir to be employed include, in addition to Cl and $H_2O$, those which are conventionally known. The iridium complex including an organic ligand described in JP-A-7-072569 is preferably employed. The iridium complex including a cyano group described in JP-A-2-761027 is more preferably employed.

A hexacyano metal complex, in addition to the iridium salt, is preferably doped into the silver halide grain of the present invention. Among hexacyano metal eomplexes, a complex in which iron, ruthenium, osmium, cobalt, rhodium, iridium, or chromium is doped is preferably employed. The amount of the metal complex to be doped preferably falls within a range of $10^{-6}$ to $10^{-2}$ mol per mol of silver halide, more preferably $10^{-5}$ to $10^{-3}$ mol, per mol of silver halide. The metal complex can be doped in the form of a solution in water or an organic solvent. The organic solvent preferably has miscibility with water. Examples of the organic solvent include alcohols, ethers, glycols, ketones, esters, and amides.

As the metal complex, a hexacyano metal complex represented by a following formula (I) is particularly preferable.

(I) $(M(CN)_6)n^-$

(wherein M represents iron, ruthenium, osmium, cobalt, rhodium, iridium, or chromium; and "n" is 3 or 4).

Specific examples of the hexacyano metal complex are shown below:

(I-1) $(Fe(CN)_6)^{4-}$

(I-2) $(Fe(CN)_6)^{3-}$

(I-3) $(Ru(CN)_6)^{4-}$

(I-4) $(Os(CN)_6)^{4-}$

(I-5) $(CO(CN)_6)^{3-}$

(I-6) $(Rh(CN)_6)^{3-}$

(I-7) $(Ir(CN)_6)^{3-}$

(I-8) $(Cr(CN)_6)^{4-}$

As a counter cation of the hexacyano complex, an ion which is readily miscible with water and appropriate for precipitation of the silver halide emulsion is preferably employed. Examples of the counter cation include alkali metal ions (e.g., a sodium ion, a potassium ion, a rubidium ion, a cesium ion, and a lithium ion), an ammonium ion, and an alkyl ammonium ion.

The silver halide emulsion employed in the invention usually undergoes water washing. The temperature at which the water washing is carried out can be selected in accordance with purpose. However, the temperature is preferably selected from a range of 5 to 50°C. A pH at which the water washing is carried out can also be selected in accordance with purpose. However, the pH is preferably selected from a range of 2 to 10, more preferably 3 to 8. A pAg at which the water washing is carried out can also be selected in accordance with purpose. However, the pAg is preferably selected from a range of 5 to 10. A method for water washing can be selected from a noodle water-washing method, dialysis with use of a diaphragm, centrifugation, a coagulation and settlement method, and an ion exchange method. The coagulation and settlement method can be selected from a method employing a sulfate, a method employing an organic solvent, a method employing a water-soluble polymer, a method employing a gelatin derivative, and the like.

The silver halide emulsion employed in the present invention can be caused to contain various compounds for the purposes of preventing fogging of the hologram material during the course of manufacturing process, storage, or processing of the same, or stabilizing the performance of the emulsion. More specifically, a number of compounds known as antifoggants or stabilizers can be added. Examples of such compounds include: thiazoles, such as benzothiazolium salts, nitroimidazoles, nitrobenzimidazoles, chlorobenzimidazoles, bromobenzimidazoles, mercaptothiazoles, mercaptobenzothiazoles, mercaptobenzimidazoles, mercaptothiadiazoles, aminotriazoles, benzotriazoles, nitrobenzotriazoles, mercaptotetrazoles (particularly 1-phenyl-5-mercaptoretrazole); mercaptopyrimidines; mercaptotriazines; thioketo compounds, such as oxazolinthione; and azaindenes, such as triazaindenes and pentaazaindenes. For instance, compounds described in U.S. Pat. Nos.3,954,474 and 3,982,947, and JP-B-52-28660 can be employed. One preferable compound is described in JP-A-63-212932. The antifoggant and the stabilizer can be added at various timings, such as before, during, or after formation of the grains; during the water washing step; during a dispersion step to be performed subsequent to the water washing; before, during, or after the chemical sensitization, or before application of the coating, in accordance with purpose. The antifoggant and the stabilizer can be employed for various purposes other than exerting their original purposes of antifogging effects and stabilizing effects. The other purposes include provision of control of the crystal habit of the grains; reduction of grain size; reduction of the solubility of the grains; control of the chemical sensitization; and control of the arrangement of the dyes.

A salt of a metal ion is preferably present during preparation of the emulsion of the present invention, such as during formation of grains, during the desalting step, during the chemical sensitization, or before application of the coating. When the salt is doped in the grains, the salt is preferably doped during formation of the grains. When the salt is employed as a modifier of the surface of the grains or as a chemical sensitizer, the salt is preferably added at timing between completion of formation of the grains and completion of the chemical sensitization. In addition, the method for doping can be either a method of doping the entirety of a grain, or a method of doping only a core or a shell of the grain. Examples of the metal include Mg, Ca, Sr, Ba, Al, Sc, Y, La, Cr, Mn, Fe, Co, Ni, Cu, Zn, Ga, Ru, Rh, Pd, Re, Os, Ir, Pt, Au, Cd, Hg, Tl, In, Sn, Pb, and Bi. Each of these metals can be added so long as it takes the form of a salt dissolvable during formation of the grains. Examples of the salt include an ammonium salt, an acetate, a nitrate, a sulfate, a phosphate, a hydroxide, a six-coordinate complex salt, and a four-coordinate complex salt. Examples of these salts include $CdBr_2$, $CdCl_2$, $Cd(NO_3)_2$, $Pb(NO_3)_2$, $Pb(CH_3COO)_2$, $K_3(Fe(CN)_6)$, $(NH_4)_4(Fe(CN)_6)$, $K_3IrCl_6$, $(NH_4)_3RhCl_6$, and $K_4Ru(CN)_6$. The ligand of these coordination compounds may be selected from the group consisting of halo, aquo, cyano, cyanate, thiocyanate, nitrosyl, thionitrosyl, oxo, and carbonyl. These metal compounds may be used singly, or in combination of two or more thereof.

The metal compound is preferably added in the form of an aqueous solution or a solution in an appropriate organic solvent, such as methanol or acetone. A method of adding an aqueous solution of hydrogen halide (e.g., HCl, or HBr) or an alkali halide (e g., KCl, NaCl, KBr, or NaBr) for the purpose of stabilizing the solution may be employed. In addition, an acid or an alkali may be added, as required. The metal compound may be added into the reaction vessel either before formation of the grains or during the course thereof. Alternatively, the metal compound may be continuously added during formation of silver halide grains, in the form of an aqueous solution of a water-soluble silver salt (e.g., $AgNO_3$) or that of an alkali halide (e.g., NaCl, KBr, KI). Further alternatively, the metal compound may be continuously

added at an appropriate step during formation of the grains, by means of preparing another solution independent from that of the water-soluble silver salt or the alkali halide. Further alternatively, various addition methods are preferably employed in combination.

The emulsion of the invention preferably employs a silver-oxidizing agent. The term "silver-oxidizing agent" referred to hereinin denotes a compound which acts on metal silver, and converts the same into silver ions. An effective method is employment of a compound capable of converting pronouncedly ultrafine silver grains, a by-product produced during formation and chemical sensitization of the silver halide grains, into silver ions. The thus-produced silver ion may form a water-insoluble silver salt, such as a silver halide, a silver sulfide, or a silver selenide; or a silver salt which is highly soluble in water, such as a silver nitrate. The silver-oxidizing agent may be either an inorganic substance or an organic substance. Examples of the inorganic oxidizing agent include ozone, hydrogen peroxide, and adducts thereof (e.g., $NaBO_2 \cdot H_2O \cdot 3H_2O$, $2NaCO_3 \cdot 3H_2O_2$, $Na_4P_2O_7 \cdot 2H_2O_2$, and $2Na_2SO_4 \cdot H_2O_2 \cdot 2H_2O$), peroxy acid salts (e.g., $K_2S_2O_8$, $K_2C_2O_6$ and $K_2P_2O_8$), peroxy complex compounds (e.g., $K_2(Ti(O_2)C_2O_4) \cdot 3H_2O$, $4K_2SO_4 \cdot Ti(O_2)\ OH \cdot SO_4 \cdot 2H_2O$, and $Na_3(VO(O_2)(C_2H_4)_2) \cdot 6H_2O$), permanganates (e.g., $KMnO_4$), chromates (e.g., $K_2Cr_2O_7$), and other oxysalts; halogen elements, such as iodine and bromine; perhalogenates (e.g., potassium periodate); salts of high-valence metals (e.g., potassium hexacyanoferrate (II)); and thiosuflonates.

Examples of the organic oxidizing agent include quinones such as p-quinone; organic peroxides such as peracetic acid and perbenzoic acid; and active halogen-releasing compounds (e.g., N-bromosuccinimide, chloramine T, and chloramine B).

Preferable examples of the oxidizer for use in the invention include inorganic oxidizing agents, such as ozone, hydrogen peroxide and adducts thereof, halogen elements, and thiosulfonates; and organic oxidizing agents, such as quinoncs. In a preferable mode, the silver oxidizer is employed in conjunction with the foregoing reduction sensitization method. A method for employing the oxidizing agent can be selected from: a method of applying the oxidizing agent, and thereafter performing reduction sensitization; a method of applying the same in reverse order; and a method of performing both simultaneously These methods can be selectively employed either during the formation of the grains, or during the chemical sensitization.

The hologram material of the invention particularly preferably includes a hydrazine compound having a group which can be absorbed onto a silver halide described in JP-A-7-134351, a hydroxamic acid-based compound described in JP-A-8-114884 or JP-A-8-314051, a hydroxysemicarbazido-based compound described in JP-10-90819, and a hydroxylamine-based compound having a group capable of adsorption onto a silver halide described in JP-A-2002-323729. The timing at which the selected compounds is added can be selected from a period between formation of the emulsion grains and the coating application thereof, preferably during the course of the chemical sensitization or a subsequent period until application of the coating. The amount to be added is also arbitrary. However, in view of characteristics of an emulsion of ultrafine grains, in some cases a significantly excessive amount of ten times the amount described in these patent specifications or more is preferable. The specific amount of the selected compounds can be readily determined by experiment.

A compound—which undergoes one-electron oxidation to thus form a one-electron-oxidized form thereof, wherein the one-electron-oxidized form is capable of releasing one or more additional electrons—is preferably employed in the hologram material of the invention. The compound is a compound selected from the following group constituted of Types 1 and 2.

(Type 1)

A compound which undergoes one-electron oxidation to thus form a one-electron-oxidized form thereof, wherein the one-electron-oxidized form is capable of releasing one or more additional electrons while being accompanied by a subsequent bond-cleavage reaction.

(Type 2)

A compound which undergoes one-electron oxidation to thus form a one-electron-oxidized form thereof, wherein, after having undergone a subsequent bonding reaction, the one-electron-oxidized form is capable of releasing one or more additional electrons.

The compounds of type 1 will now be described.

Specific examples of the compound of Type 1, the compound—which undergoes one-electron oxidation to thus form a one-electron-oxidized form, wherein the one-electron-oxidized form is capable of releasing one or more additional electrons while being accompanied by a subsequent bond-cleavage reaction—include compounds, known as "one-photon-two-electron sensitizers" or "deprotonating electron-donating sensitizers," described in JP-A-9-211769 (specific examples: compounds PMT-1 to S-37 described in Tables E and F on pages 28 to 32), JP-A-9-211774, JP-A-11-95355 (specific examples: compounds INV 1 to 36), JP-T-2001-500996 (the term "JP-T" as used herein means a

published Japanese translation of a PCT patent application) (specific examples: compounds 1 to 74, 80 to 87, and 92 to 122), U.S. Pat. Nos.5,747,235 and 5,747,236, European Patent No. 786692A1 (specific examples: compounds INV 1 to 35), European Patent No. 893732A1, and U.S. Pat. Nos.6,054,260 and 5,994,051. A preferable range for each of these compounds is identical with the preferable range described in the cited patent specification.

The compounds of type 2 will now be described.

Specific examples of the compound of Type 2, the compound—which undergoes one-electron oxidation to thus form a one-electron-oxidized form, wherein the one-electron-oxidized form is capable of releasing one or more additional electrons while being accompanied by a subsequent bonding reaction—include compounds represented by a formula (1) described in JP-A-2003-14028, and compounds which can cause a reaction represented by a chemical equation (1) described in JP-A-2003-33446 and which are represented by a formula (2) described in the same. A preferable range for each of these compounds is identical with the preferable range described in the cited patent specification.

Next, the binder for use in the hologram recording material of the present invention will be described.

The silver halide hologram material for forming the holography of the invention preferably contains low-molecular-weight gelatin. More preferably, low-molecular-weight gelatin is contained in the silver halide emulsion. The "low-molecular-weight gelatin" as defined in the present invention means gelatin whose number average molecular weight falls within a range of 3,000 to 50,000, more preferably 10,000 to 30,000. The gelatin employed in the invention may be gelatin having undergone any of various modification treatments described below. Examples of these modified gelatins include phthalated gelatin, succinated gelatin, trimellitated gelatin, and pyronnellitated gelatin, each of whose amino group is modified; esterified gelatin and amidated gelatin, each of whose carboxyl group is modified; formylated gelatin whose imidazole group is modified; oxidized gelatin having a reduced number of methionine groups; and reduced gelatin having an increased number of methionine groups.

Meanwhile, other hydrophilic colloids can be employed. There can be employed a variety of synthetic hydrophilic high polymers: for examples; proteins such as gelatin derivatives graft polymers of gelatin and another polymer, albumin, and casein; cellulose derivatives such as hydroxycellulose, carboxymethylcellulose, and cellulose sulfate ester; sugar derivatives, such as sodium alginate and starch derivatives; and homopolymers or copolymers such as polyvinyl alcohols, polyvinyl alcohol partial acetals, poly-N-vinylpyrrolidone, polyacrylic acid, polymethacrylic acids, polyacrylamide, polyvinylimidazole, and polyvinylpyrazole. Examples of the gelatin employable in the invention include, in addition to lime-processed gelatin, acid-treated gelatin, and enzymatically-treated gelatin described in Bull. Soc. Sci. Photo. Japan, No. 16 (1966), page 30. Alternatively, hydrolyzate or enzymatic decomposition of gelatin can be employed.

Next, an organic refractive index-modulating agent for use m the hologram recording material of the present invention will be described. The organic refractive index-modulating agent of the invention is any one of the following:

1) a refractive index-modulating coupler capable of modulating a refractive index by means of coupling reaction with an oxidized form of a developing agent during a development process;
2) a high refractive index compound-releasing agent or a low refractive index compound-releasing agent capable of releasing a high refractive index compound or a low refractive index compound during a development process;
3) a polymerizable compound capable of undergoing polymerization during a development process, thereby modulating a refractive index; and
4) a gas-developing agent capable of generating bubbles during a development process.

The respective organic refractive index-modulating agents, and hologram recording methods based on recording of interference fringe by means of refractive index modulation by making use the respective agents will be described below.

Meanwhile, the hologram recording material of the invention may be either a material whose refractive index is increased at a bright region of interference fringes (hereinafter called an "interference bright region') and decreased in an interference dark region, or, in contrast, a material whose refractive index is decreased at an interference bright region and increased in an interference dark region.

First will be described the case where the organic refractive index-modulating agent of the invention is 1) the refractive index-modulating coupler capable of modulating a refractive index by means of coupling reaction with an oxidized form of a developing agent during a development process.

The refractive index-modulating coupler is preferably represented by the following formula (1-1) or (1-2).

Formual (1-1)

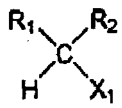

Formula (1-2)

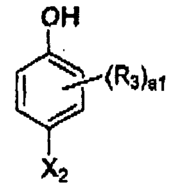

In formula (I-1), each of $R_1$ and $R_2$ independently represents a substituent. Preferable examples of the substituent include an alkyl group (preferably having 1 to 20 carbon (C) atoms; e.g., methyl, ethyl, n-propyl, isopropyl, n-butyl, n-pentyl, benzyl, 3-sulfopropyl, 4-sulfobutyl, carboxymethyl, or 5-carboxypentyl), an alkenyl group (preferably having 2 to 20 carbon atoms; e.g., vinyl, allyl, 2-butenyl, or 1,3-butadienyl), a cycloalkyl group (preferably having 3 to 20 carbon atoms; e.g., cyclopentyl or cyclohexyl) an aryl group (preferably having 6 to 20 carbon atoms; e.g., phenyl, 2-chlorophenyl, 4-methoxyphenyl, 3-methylphenyl, or 1-naphthyl), a heterocyclic group (preferably having 1 to 20 carbon atoms; e.g., pyridyl, thienyl, furyl, thiazolyl, imidazolyl, pyrazolyl, pyrolidino, piperidino, morpholino, quinolyl, or quinazolyl), an alkinyl group (preferably having 2 to 20 carbon atoms; e.g., ethinyl, 2-propinyl, 1,3-butadinyl, or 2-phenylethinyl), a halogen atom ( e.g., F, Cl, Br, or I), an amino group (preferably having 0 to 20 carbon atoms; e.g., amino, dimethylamino, diethylamino, dibutylamino, or aniliao), a cyano group, a nitro group, a hydroxyl group, a mercapto group, a carboxyl group, a sulfo group, a phosphoric acid group, an acyl group (preferably having 1 to 20 carbon atoms; e.g., acetyl, benzoyl, salicyloyl, or pivaloyl), an alkoxy group (preferably having 1 to 20 carbon atoms; e.g., methoxy, butoxy, or cyclohexyloxy), an aryloxy group (preferably having 6 to 26 carbon atoms; e.g., phenoxy or 1-naphthoxy), an alkylthio group (preferably having 1 to 20 carbon atoms; e.g., methylthio or ethylthio), an arylthio group (preferably having 6 to 20 carbon atoms; e.g., phenylthio or 4-chloropbenyhhio), an alkylsulfonyl group (preferably having 1 to 20 carbon atoms; e.g., methanesulfonyl or butanesulfanyl), an arylsulfonyl group (preferably having 6 to 20 carbon atoms; e.g., benzenesulfonyl or paratoluenesulfonyl), a sulfamoyl group (preferably having 0 to 20 carbon atoms; e.g., sulfamoyl, N-methylsulfamoyl, or N-phenylsulfamoyl), a carbamoyl group (preferably having 1 to 20 carbon atoms; e.g., carbamoyl, N-methylcarbamoyl, N,N-dimethylcarbamoyl, or N-phenylcarbamoyl), an acylamino group (preferably having 1 to 20 carbon atoms; e.g., acetylamino or benzoylamino), an imino group (preferably having 2 to 20 carbon atoms; e.g., phthalimino), an acyloxy group (preferably having I to 20 carbon atoms; e.g., acetyloxy or benzoyloxy), an alkoxycarbonyl group (preferably having 2 to 20 carbon atoms; e.g., methoxycarbonyl or phenoxycarbonyl), a carbamoylamino group (preferably having 1 to 20 carbon atoms; e.g., carbamoylamino, N-methylcarbamoylamino, or N-phenylcarbamoylamino), and an alkoxycarbamoylamino group (preferably having 1 to 20 carbon atoms; e.g., methoxycarbamoylammo or isopentyloxycarbamoylamino); more preferably an alkyl group, an alkenyl group, an aryl group, a heterocyclic group, a cyano group, an acyl grouop, an alkoxy group, an allcylsufonyl group, an arylsulfonyl group, a sulfamoyl group, a carbarnoyl group, an acyloxy group, and an alkoxycarbonyl group; and still more preferably an aryl group, a heterocyclic group, a cyano group, an acyl grouop, an alkylsufonyl group, an arylsulfonyl goup, a sulfamoyl group, a carbamoyl group, and an alkoxycarbonyl group.

$R_1$ and $R_2$ may be linked together to thus form a ring. Preferable examples of the ring to be formed include those represented by Genera formulae (6-1) to (6-5), to be described later.

In formula 1-1, $X_1$ represents a hydrogen atom or a leaving group capable of departing as an anion upon coupling reaction with an oxidized form of a developing agent. Preferable examples of the leaving group include a halogen atom, an alkoxy group, an aryloxy group, a heterocyclic group, an alkylthio group, an arylthio group, and an acyloxy group (preferable examples of these groups are the same with those listed for $R_1$).

Alternatively, the refractive index-modulating coupler represented by formula (1-1) is preferably represented by any one of the following formulae (6-1) to (6-8).

Meanwhile, formulae (6-2) to (6-5) are represented by equilibrium equations as follows.

Formula (6-1)

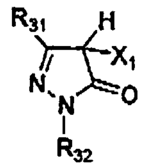

Formula(6-2)

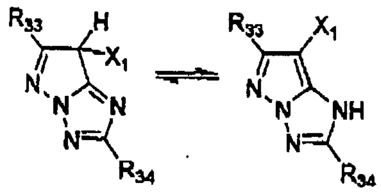

Formula(6−3)

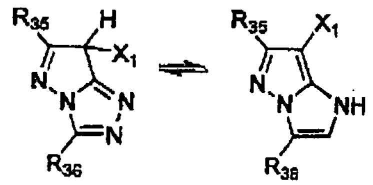

Formula(6−4)

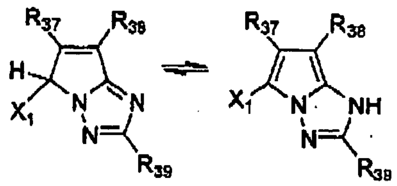

Formula(6−5)

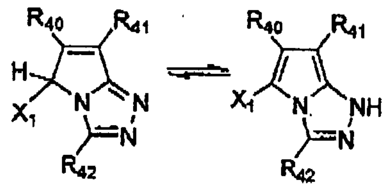

Formula(6−6)

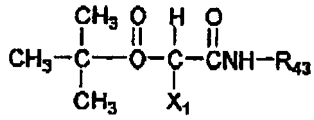

Formula(6−7)

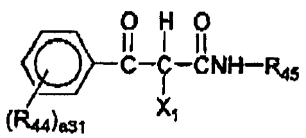

Formula(6−8)

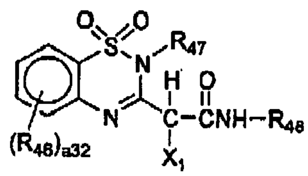

In formulae (6-1) to (6-8), $X_1$ has the same meaning as in formula (1-1). In formulae (6-1) to (6-8), each of $R_{31}$ to $R_{42}$, $R_{44}$, and $R_{46}$ independently represents a hydrogen atom or a substituent (preferable examples thereof are the same as those listed for $R_1$); $R_{31}$ is preferably an alkyl group, an aryl group, an anilino group, or an acylamino group; $R_{32}$ is preferably an alkyl group, aryl group, or a heterocyclic group; each of $R_{33}$ to $R_{36}$, $R_{39}$, and $R_{42}$ is preferably an alkyl group or an aryl group, $R_{40}$ is preferably a cyano group; and $R_{41}$ is preferably an alkoxycarbonyl group or a carbamoyl group. Each of $R_{44}$ and $R_{46}$ is preferably an alkyl goup, aryl group, an alkoxy group, an aryloxy group, a halogen atom, an alkoxycarbonyl group, or a carbamoyl group.

In formulae (6-6) to (6-8), each of $R_{43}$, $R_{45}$, $R_{47}$, and $R_{48}$ independently represents a hydrogen atom, an alkyl group, an alkenyl group, a cycloalkyl group, an aryl group, or a heterocyclic group.

In the above, a31 is an integer from 0 to 5, preferably 0 or 1; and a32 is an integer from 0 to 4, preferably 0 or 1.

When a31 is 2 or larger, the plurality of $R_{44}$'s may be the same or different from each other; and when a32 is 2 or larger, the plurality of $R_{46}$'s may be the same or different from each other.

Next, in formula (1-2), $R_3$ represents a substituent (preferable examples thereof are the same as those listed for $R_1$), and preferably an alkyl group, an alkenyl group, an aryl group, a heterocyclic group, a halogen atom, an amino group, a cyano group, a hydroxyl group, an acyl group, an alkoxy group, an aryloxy group, a carbamoyl group, an acylamino group, an alkoxycarbonyl group, a carbamoylamino group, or an alkoxycarbonylamino group; more preferably an alkyl group, an alkenyl group, a halogen atom, an amino group, a carbamoyl group, an acylamino group, an alkoxycarbonyl group, a carbamoylamino group, or an alkoxycarbonylamino group.

In the above, al is an integer from 0 to 4, preferably 2 or 3. When al is 2 or larger, the plurality of $R_3$'s may be the same or different from each other; and may be linked together to thus form a ring. Preferable examples of the ring to be formed include a benzene ring, a naphthalene ring, a pyridine ring, and a cyclohexene ring.

In the above, $X_2$ represents a leaving group capable of departing as an anion upon coupling reaction with a hydrogen atom or an oxidized form of a developing agent. Preferable examples of the leaving group include a halogen atom, an alkoxy group, an aryloxy group, a heterocyclic group, an alkylthio group, an arylthio group, and an acyloxy group (preferable examples of these groups are the same as those listed for $R_1$).

Alternatively, the refractive index-modulating coupler represented by formula (1-2) is preferably represented by the following formula (6-9) or (6-10).

Formula(6−9)

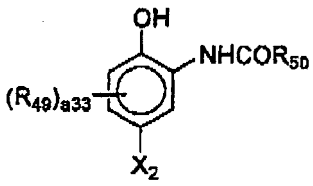

Formula(6−10)

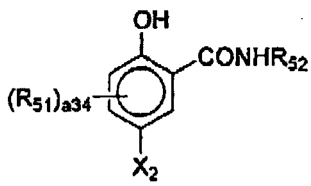

In formulae (6-9) and (6-10), $X_2$ has the same meaning as in formula (1-2).

In formulae (6-9) and (6-10), each of $R_{50}$ and $R_{52}$ independently represents a hydrogen atom, an alkyl group, an alkenyl group, a cycloalkyl group, an aryl group, or a heterocyclic group. Each of $R_{49}$ and $R_{51}$ independently represents a substituent (preferable examples thereof are the same as those listed for $R_1$); $R_{49}$ preferably represents an alkyl group, a halogen atom, an acylamino group, or a carbamoylamino group; and $R_{51}$ preferably represents an alkyl group, a balogen atom, an amino group, an acylamino group, or an alkoxycarbonylamino group.

In the above, a33 is an integer from 0 to 3, preferably 1 or 2; and a34 is an integer from 0 to 5, preferably 0 or 1. When a33 is 2 or larger, the plurality of $R_{49}$'s may be the same or different from each other; and when a34 is 2 or larger, the plurality of $R_{51}$'s may be the same or different from each other.

The refractive index-modulating coupler of the invention is preferably represented by formula (I-1).

The refractive index-modulating coupler of the invention is preferably capable of modulating the refractive index upon coupling reaction with an oxidized form of a developing agent, by means of any one the following methods or a combination thereof:

A) color development reaction;

B) release of a leaving group having a low refractive index; and

C) coupling reaction with the oxidized form of the developing agent having a high refractive index. Each of the above is a method to be performed as follows. A silver halide is sensitized in accordance with interference fringes by holographic exposure, to thus form a latent image, and thereafter subjected to a development process. A developing agent at an interference bright region, where the silver halide is sensitized, is oxidized to produce an oxidized form of the developing agent, and undergoes a coupling reaction with a refractive index-modulating coupler accompanied by departure of a leaving group. In contrast, the developing agent at an interference dark region, where the silver halide is not sensitized, undergoes no reaction, and the refractive index-modulating coupler remains unchanged. Hence, interference fringes are recorded through utilization of the refractive index modulation, thereby attaining hologram recording.

For the method by means of the color development reaction described in A), a compound produced by reaction with an oxidized form of a developing agent exhibits no absorption on the hologram recording wavelength, thereby attaining a high diffraction efficiency, which is preferable.

The term "color development reaction" referred to hereinin means such a reaction in which an absorption spectrum line shape changes in a wavelength range of ultraviolet rays, visible light, and infrared rays of 200 to 2,000 nm; more preferably a reaction in which either an increase in a linear absorption maximum (λmax) or an increase in ε—extinction coefficient—occurs in the absorption spectrum; further preferably a reaction in which both of these occur. The color development reaction preferably occurs in a wavelength region of 200 to 1,000 nm, more preferably 300 to 800 nm.

Generally, a dye has a high refractive index in a wavelength range from near a linear absorption maximum (λmax) to a longer wavelength; and particularly has a pronouncedly high value in a wavelength range of λmax to a wavelength higher than λmax by about 200 nm. Some dyes exhibit a refractive index higher than 1.8, which in some cases reaches a high value exceeding even 2. Meanwhile, organic compounds other than dyes, which dyes include, for example, a binder polymer, have a refractive index of about 1.4 to 1.6.

Thus, it is revealed that not only a favorable absorption index difference but also a large refractive index difference can be produced by means of causing a refractive index-modulating coupler to develop colors through holographic exposure.

For the method of releasing a leaving group having a low refractive index described in B), the leaving group $X_1$ in formula (1-1) or the leaving group $X_2$ in formula (1-2) is preferably a group including a fluorine atom.

Preferable examples of refractive index-modulating coupler of the invention represented by formula (1-1) or (1-2) are listed below. However, the invention is not limited thereto.

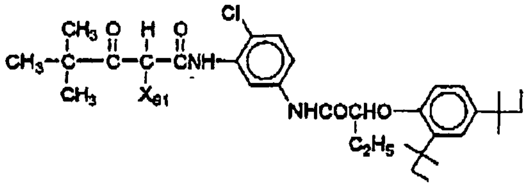

| | $X_{61}$ |
|---|---|
| C-1 | —H |
| C-2 | 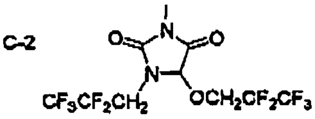 |
| C-3 | 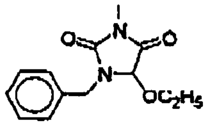 |

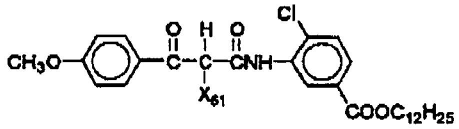

| | $X_{61}$ |
|---|---|
| C-4 | —H |
| C-5 | 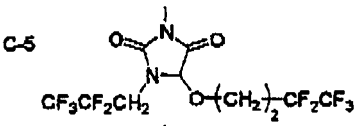 |
| C-6 | 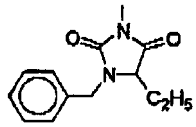 |

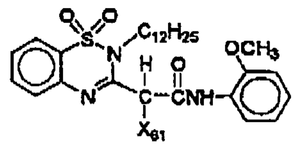

| | $X_{61}$ |
|---|---|
| C-7 | 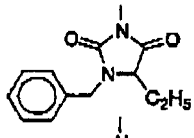 |
| C-8 | 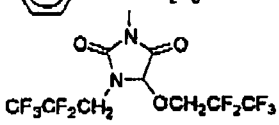 |

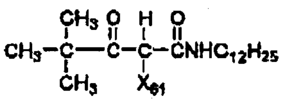

| | $X_{61}$ |
|---|---|
| C-9 | 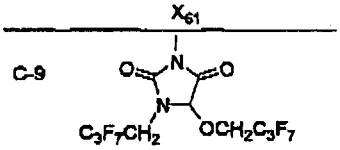 |
| C-10 | 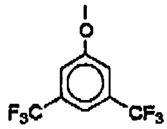 |
| C-11 | $-OCH_2CH_2C_8F_{13}$ |

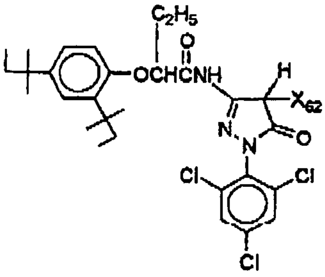

| | $X_{62}$ |
|---|---|
| C-12 | $-H$ |
| C-13 | 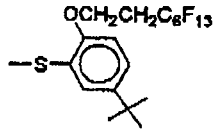 |
| C-14 | 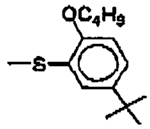 |

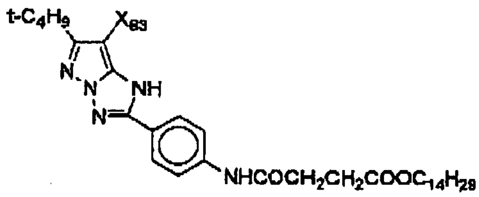

| | $X_{63}$ |
|---|---|
| C-15 | $-H$ |
| C-16 | $-Cl$ |
| C-17 | 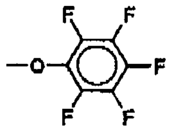 |
| C-18 | $-OCH_2CH_2C_6F_{13}$ |

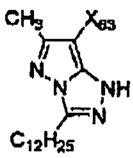

| | $X_{63}$ |
|---|---|
| C-19 | $-H$ |
| C-20 | $-F$ |
| C-21 | 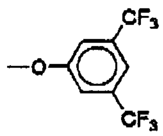 |

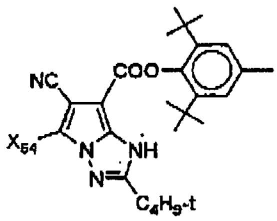

| | $X_{64}$ |
|---|---|
| C-22 | $-H$ |
| C-23 | $-Cl$ |
| C-24 | $-OCH_2CH_2C_6F_{13}$ |
| C-25 | 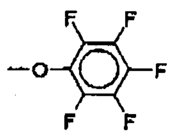 |

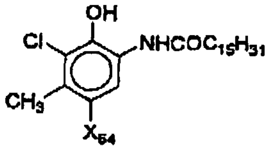

| | $X_{64}$ |
|---|---|
| C-26 | —Cl |
| C-27 | 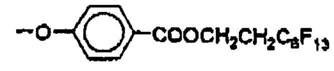 |

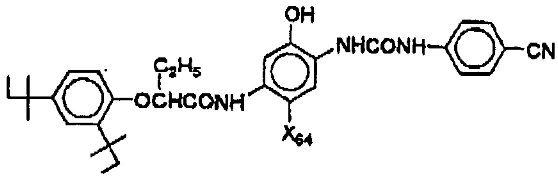

| | $X_{64}$ |
|---|---|
| C-28 | —H |
| C-29 | —Cl |
| C-30 | 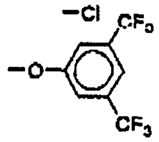 |

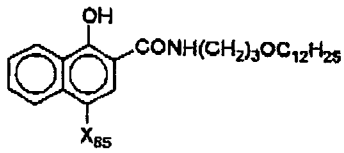

| | $X_{65}$ |
|---|---|
| C-31 | —H |
| C-32 | —Cl |
| C-33 | 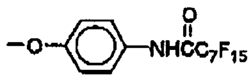 |

| | | | |
|---|---|---|---|
| C-34 | 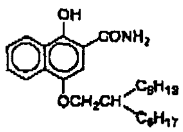 | C-39 | 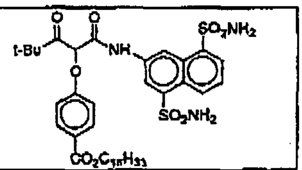 |
| C-35 | 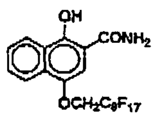 | C-40 | 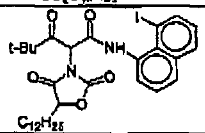 |
| C-36 | 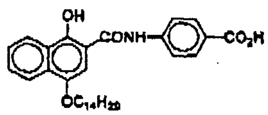 | C-41 | 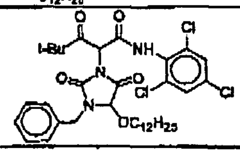 |
| C-37 | 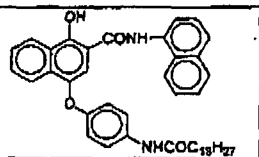 | C-42 | 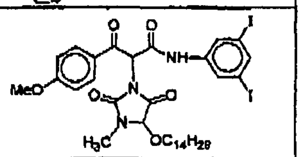 |
| C-38 | 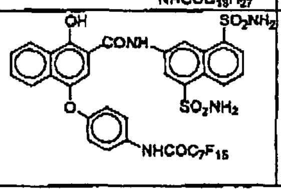 | C-43 | 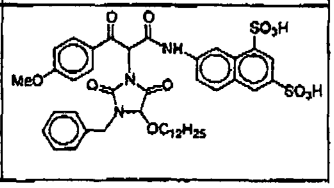 |

| | | | |
|---|---|---|---|
| C-44 | 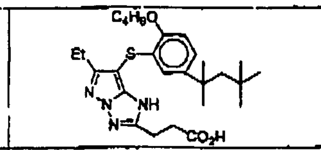 | C-49 | 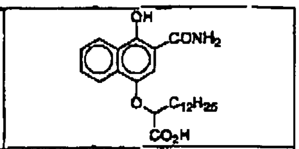 |
| C-45 | 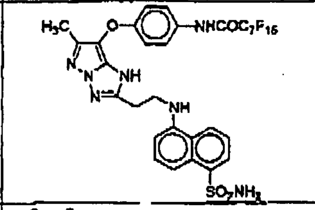 | C-50 | 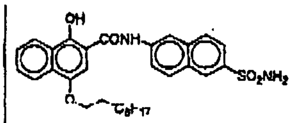 |
| C-46 | 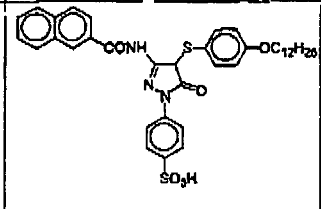 | C-51 | 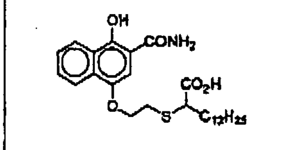 |
| C-47 | 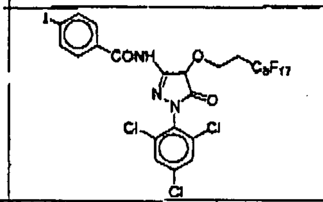 | C-52 | 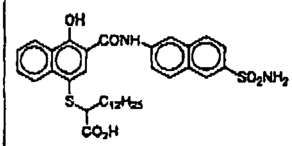 |
| C-48 | 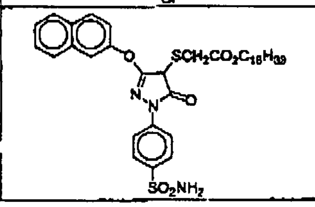 | C-53 | 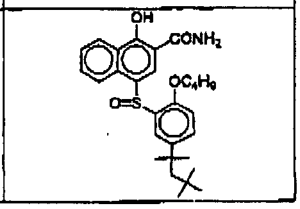 |

Next, a method for forming a coupling with the oxidized form of the developing agent having a high refractive index described in C) above will be described.

First, the developing agent for use in the hologram recording method of the invention is preferably a reduction agent represented by formula (4), (6) or (7), and reduces a silver halide into elemental silver during a development process; in order to attain this reduction, the reduction agent itself is oxidized, wherein an oxidized form thereof can react with a refractive index-modulating coupler.

Formula (4)

$$X_7 \leftarrow CR_9=CR_{10} \rightarrow_{a4} X_8$$

Formula (6)

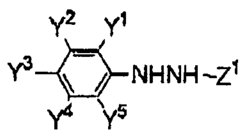

Formula (7)

$$A^3\text{-NHNH-}Z^2$$

In formula (4), each of $X_7$ and $X_8$ independently represents an -OH group or $-NR_{17}R_{18}$ group, wherein each of $R_{17}$ and $R_{18}$ independently represents a hydrogen atom, an alkyl group, an alkenyl group, a cycloalkyl group, an aryl group, or a heterocyclic group (preferable examples of these groups are the same as those listed for $R_1$), preferably a hydrogen atom, an alkyl group, or an aryl group. Each of $R_9$ and $R_{10}$ represents a hydrogen atom or a substituent (preferable examples thereof are the same as those listed for $R_1$), preferably a hydrogen atom, an alkyl group, an aryl goup, or a hydroxyl group. $R_9$ and $R_{10}$ may be linked together to thus form a ring, and a ring to be formed is preferably a benzene ring.

a4 is an integer from 0 to 5. When a4 is 2 or larger, the plurality of $R_9$'s and $R_{10}$'s may be the same or different from each other.

In formulae (6) and (7), $Z^1$ represents an acyl group, a carbamoyl group, an alkoxycarbonyl group, or an

aryloxycarbonyl group; and $Z^2$ represents a carbamoyl group, an alkoxycarbonyl goup, or an aryloxycarbonyl group. Each of $Y^1$, $Y^2$, $Y^3$, $Y^4$, and $Y^5$ independently represents a hydrogen atom or a substituent. It should be noted that a sum of Hammett's substituent constants σp of $Y^1$, $Y^3$, and $Y^5$, and σm of $Y^2$ and $Y^4$ falls within the range of 0.80 and 3.80. The Hammett's substituent constants σp and σm are described in detail in: Inamoto Naoki, "Hammett Rule—Structure and Reactivity—" (Maruzen); "New Experimental Chemical Course 14, Synthesis and Reaction of Organic Compounds V" page 2605, edited by the Chemical Society of Japan (Maruzen); Nalsaya Tadao, "Explanation on Theoretical Organic Chemistry" page 217 (Tokyo Kagaku Dojin); Chemical Review, Volume 91, 1991, pages 165 to 195; and the like. $A^3$ represents a heterocyclic group.

The acyl group represented by $Z^1$ preferably has 1 to 50 carbon atoms, more preferably 2 to 40 carbon atoms. Specific examples thereof include an acetyl group, a 2-methyl propanoyl group, a cyclohexylcarbonyl group, n-octanoyl group, a 2-hexyldecanoyl group, a dodecanoyl group, a chloroacetyl group, a trifluoroacetyl group, a benzoyl group, a 4-dodecyloxybenzoyl group, a 2-hydroxymethylbenzoyl group, a 3-(N-hydroxy-N-methylaminocarbonyl)propanoyl group.

Cases where $Z^1$ and $Z^2$ are carbamoyl groups will be described in detail later. As the alkoxycarbamoyl group or the arylcarbamoyl group, that having 2 to 50 carbon atoms is preferable, and that having 2 to 40 carbon atoms is more preferable, Specific examples thereof include a methoxycarbonyl group, an ethoxycarbonyl group, an isobutyloxycarbonyl group, a cyclohexyloxycarbonyl group, a dodecyloxycarbonyl group, a benzyloxycarbonyl group, a phenoxycarbonyl group, a 4-cetyloxyphenoxycarbonyl goup, a 2-hydroxymethylphenoxycarbonyl group, and a 2-dodecyloxyphenoxycarbonyl group.

When any one of $Y^1$ to $Y^5$ is a substituent, specific examples thereof include a straight-or branched-, chain or cyclic alkyl group having 1 to 50 carbon atoms (e.g., trifluoromethyl, methyl, ethyl, propyl, heptafluoropropyl, isopropyl, butyl, t-butyl, t-pentyl, cyclopentyl, cyclohexyl, octyl, 2-etylhexyl, and dodecyl); a straight- or branched-, chain or cyclic alkenyl group having 2 to 50 carbon atoms (e.g., vinyl, 1-methylvinyl, and cyclohexene-1-yl); an alkynyl group having 2 to 50 carbon atoms (e.g., ethinyl and 1-propinyl); an aryl group having 6 to 50 carbon atoms (e.g., phenyl, naphthyl, and anthryl); an acyloxy group having 1 to 50 carbon atoms (e.g., acetoxy, tetradecanoyloxy, and benzoyloxy); a carbamoyloxy group having 1 to 50 carbon atoms (e.g., N,N-dimethylcarbamoyloxy); a carbonamide group having 1 to 50 carbon atoms (e.g., formamide, N-methylacetoamide, acetoamide, N-methylformamide, and benzamide); a sulfonamide group having 1 to 50 carbon atoms (e.g., methanesulfonamide, dodecanesulfonamide, benzenesulfonamide, and p-toluenesulfonamide); a carbamoyl group having 1 to 50 carbon atoms (e.g., N-methylcarbamoyl, N,N-diethylcarbamoyl, and N-mesylcarbamoyl); a sulfamoyl group having 0 to 50 carbon atoms (e.g., N-butylsulfamoyl, N,N-diethylsulfamoyl, and N-methyl-N-(4-methoxyphenyl)sulfamoyl); an alkoxy group having 1 to 50 carbon atoms (e.g., methoxy, propoxy, isopropoxy, octyloxy, t-octyloxy, dodecyloxy, and 2-(2,4-di-t-pentylphenoxy)ethoxy); an aryloxy group having 6 to 50 carbon atoms (e.g., phenoxy, 4-methoxyphenoxy, and naphthoxy); an aryloxycarbonyl group having 7 to 50 carbon atoms (e.g., phenoxycarbonyl and naphthoxycarbonyl); an alkoxycarbonyl group having 2 to 50 carbon atoms (e.g., methoxycarbonyl and t-butoxycarbonyl); an N-acylsulfamoyl group having 1 to 50 carbon atoms (e.g., N-tetradecanoylsulfamoyl and N-benzoylsulfamoyl); an alkylsulfonyl group having 1 to 50 carbon atoms (e.g., methanesulfonyl, octylsulfonyl, 2-methoxyethylsulfonyl, and 2-hexyldecylsulfonyl); an arylsulfonyl group having 6 to 50 carbon atoms (e.g., benzenesulfonyl, p-toluenesulfonyl, and 4-phenylsulfonylphenylsulfonyl); an alkoxycarbonylamino group having 2 to 50 carbon atoms (e.g., ethoxycarbonylamino); an aryloxycarbonylamino group having 7 to 50 carbon atoms (e.g., phenoxycarbonylamino and naphthoxycarbonylamino); an amino group having 0 to 50 carbon atoms (e.g., amino, methylamino, diethylamino, diisopropylamino, anilino, and morpholino); a cyano group; a nitro group; a carboxyl group; a hydroxy group; a sulfo group; a mercapto group; an alkylsulfinyl group having 1 to 50 carbon atoms (e.g., methanesulfinyl and octanesulfinyl); an arylsulfinyl group having 6 to 50 carbon atoms (e.g., benzenesulfinyl, 4-chlorophenylsulfinyl, and p-toluenesulfinyl); an alkylthio group having 1 to 50 carbon atoms (e.g., methylthio, octylthio, and cyclohexylthio); an arylthio group having 6 to 50 carbon atoms (e.g., phenylthio and naphthylthio); a ureido group having 1 to 50 carbon atoms (e.g., 3-methylureido, 3,3-dimethylureido, and 1,3-diphenylureido); a heterocyclic group having 2 to 50 carbon atoms (having at least one, preferably 1 to 9, atoms of nitrogen, oxygen, sulfur, or the like as the hetero atom, and being a 3- to 12-membered monocyclic or fused ring; e.g., 2-furyl, 2-pyranyl, 2-pyridyl, 2-thieny4 2-imidazolyl, morpholino, 2-quinolyl, 2-benzimidazolyl, 2-benzothiazolyl, and 2-benzoxazolyl); an acyl group having 1 to 50 carbon atoms (e.g., acetyl, benzoyl, and trifluoroacetyl); a sulfamoylamino group having 0 to 50 carbon atoms (e.g., N-butylsulfamoylamino and N-phenylsulfamoylamino); a silyl group having 3 to 50 carbon atoms (e.g., trimethylsilyl, dimethyl-t-butylsilyl, and triphenylsilyl); and a halogen atom (e.g., a fluorine atom, a chlorine atom, and a bromine atom). Each of the above-listed substituents may further have another substituent. Examples of the substituent include the above-listed substituents. $Y^1$, $Y^2$, $Y^3$, $Y^4$, and $Y^5$ may be bonded together so as to form a fused ring.

Preferred examples of each of $Y^1$ to $Y^5$ are a hydrogen atom, a cyano group, a sulfonyl group, a sulfinyl group, a sulfamoyl group, a carbamoyl group, an alkoxycarbonyl group, an aryloxycarbonyl group, an acyl group, a trifluoromethyl group, a halogen atom, an acyloxy group, an acylthio group, and a heterocyclic group. 2 to 5 groups selected therefrom are preferably included in $Y^1$ to $Y^5$, more preferably 3 to 5 groups are included in the same. Preferred examples of the

heterocyclic ring include 5- to 8-membered heterocyclic rings including nitrogen; e.g., pyridine, pyrimidine, pyridazine, pyrazine, 1,2,4-triazine, 1,3,5-triazine, pyrazole, imidazole, thiazole, isothiazole, oxazole, isooxazole, and 1,2,4-thiadiazole.

In formula (7), $A^3$ represents a heterocyclic group. The heterocyclic group is preferably a heterocyclic group having 1 to 50 carbon atoms; having 1 to 9 atoms of nitrogen, oxygen, sulfur, or the like as the hetero atom; and being a saturated or unsaturated 3- to 12-membered (preferably 3- to 8-membered) monocyclic or fused ring. Specific examples thereof include furan, pyran, pyridine, thiophene, imidazole, quinoline, benzimidazole, benzothiazole, benzoxazole, pyrimidine, pyrazine, 1,2,4-thiadiazole, pyrrole, oxazole, thiazole, quinazoline, isothiazole, pyridazine, indole, pyrazole, triazole, and quinoxaline. Preferred examples of the heterocyclic ring include 5- to 8-membered heterocyclic rings including nitrogen (preferably 1 to 4 nitrogen atoms); e.g., quinazoline, quinoxaline, phthalazine, quinoline, isoquinoline, benzothiazole, benzoxazole, benzimidazole, pteridine, and purine. Each of these heterocyclic groups may have a substituent, and preferably has 1 to 9 electron-withdrawing groups. The electron-withdrawing group referred to here means a substituent having a positive Hammett constant σp.

Furthermore, the developing agent represented by formula (4) is preferably represented by formula (5).

Formula (5)

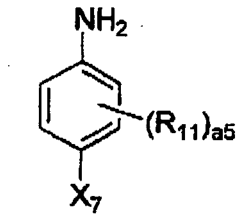

In formula (5), $X_7$ has the same meaning as in formula (4). $R_{11}$ represents a substituent (preferable examples thereof are the same as those listed for $R_1$), and preferably an alkyl group, alkoxy group, an aryloxy group, or a halogen atom; more preferably a methyl group. a5 is an integer from 0 to 4, preferably 0 or 1, more preferably 1. When a5 is 2 or larger, the plurality of $R_{11}$'s may be the same or different from each other; and may be linked together to thus form a ring. Preferable examples of the ring to be formed include a benzene ring and a cyclohexene ring.

The developing agents respectively represented by formulae (6) and (7) are preferably represented by formulae (8) and (9) respectively.

Formual (8)

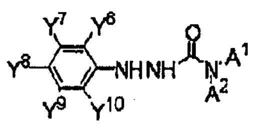

Formual (9)

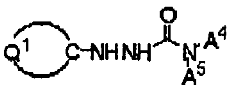

In formula (8), each of $A^1$ and $A^2$ independently represents a hydrogen atom or a substituent; and each of $Y^6$, $Y^7$, $Y^8$, $Y^9$, and $Y^{10}$ independently represents a hydrogen atom, a cyano group, a sulfonyl group, a sufinyl group, a sulfamoyl group, a carbamoyl group, an alkoxycarbonyl group, an aryloxycarbonyl group, an acyl group, a trifluoromethyl group, a halogen atom, an acyloxy group, an acylthio group, or a heterocyclic group. It should be noted that a sum of Hammett's substituent constants σp of $Y^6$, $Y^8$, and $Y^{10}$, and σm of $Y^7$ and $Y^9$ falls within the range of 1.20 and 3.80. In formula (9), each of $A^4$ and $A^5$ independently represents a hydrogen atom or a substituent; and $Q^1$ represents a non-metallic atom group which is necessary for forming a 5- to 8-membered heterocyclic group together with C.

Each of $A^1$ and $A^2$ in formula (8), $A^4$ and $A^5$ in formula (9) independently represents a hydrogen atom or a substituent. Specific examples of the substituent include those having been described for $Y^1$ to $Y^5$. The substituent is preferably a hydrogen atom, a substituted or unsubstituted alkyl group having 1 to 50 carbon atoms, a substituted or unsubstituted aryl group having 6 to 50 carbon atoms, and a substituted or unsubstituted heterocyclic group having I to 50 carbon atoms; and further preferably at least one of $A^1$ and $A^2$, and at least one of $A^4$ and $A^5$ are hydrogen atoms. Examples of the substituent to be substituted by the above-described group include those denoted by $Y^1$ to $Y^5$.

In formula (9), $Q^1$ represents a non-metallic atom group which is necessary for forming a 5- to 8-membered heterocyclic group together with C. The heterocyclic ring formed by $Q^1$ and C means the same as $A^3$ in formula (7), and

preferred examples thereof are also the same.

Furthermore, the developing agent represented by one of formulae (4) to (9) may be contained either in a hologram recording material or in a developing solution; and is preferably contained in the developing solution.

Preferable examples of the developing agent of the invention represented by one of formulae (4) to (9) are listed below. However, the invention is not limited thereto.

D-1
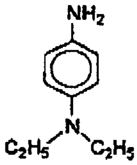

D-2
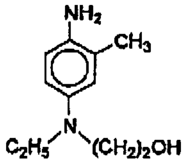

D-3
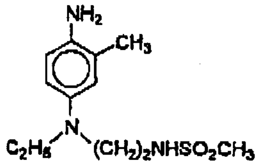

D-4
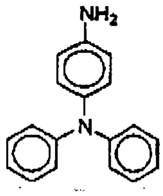

D-5
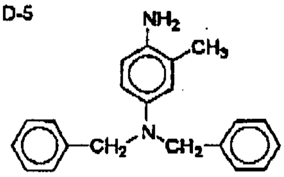

D-6
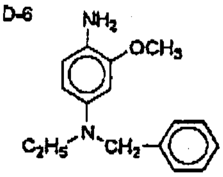

D-7
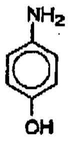

D-8
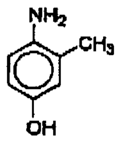

D-9
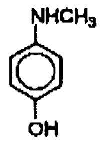

D-10
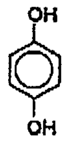

D-11
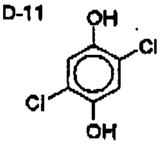

D-12
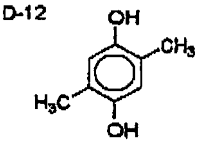

D-13 $H_2N-NH_2$

D-14 $H_2N-OH$

D-15
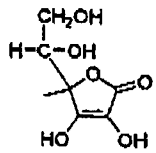

| | | | |
|---|---|---|---|
| D-16 | 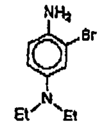 | D-21 | 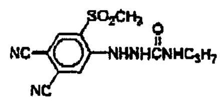 |
| D-17 | 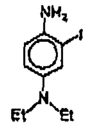 | D-22 | 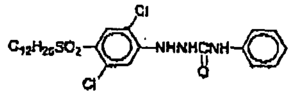 |
| D-18 | 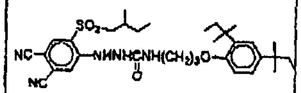 | D-23 | 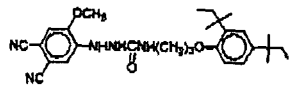 |
| D-19 | 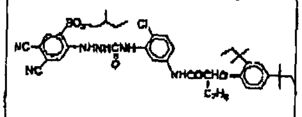 | D-24 | 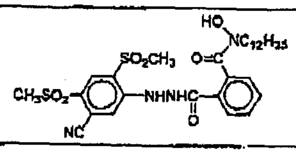 |
| D-20 | 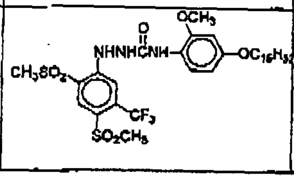 | D-25 | 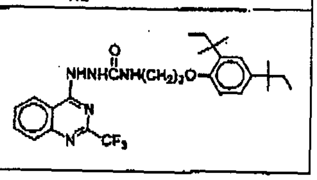 |

| | | | |
|---|---|---|---|
| D-26 | 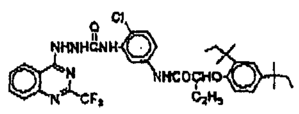 | D-31 | 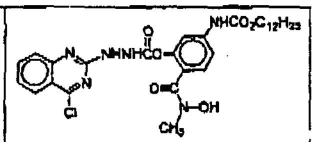 |
| D-27 | 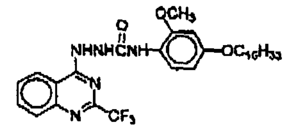 | D-32 | 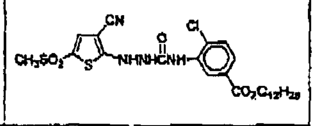 |
| D-28 | 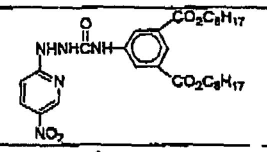 | D-33 | 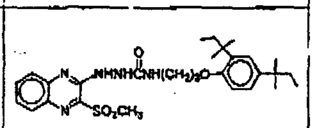 |
| D-29 | 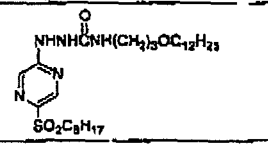 | D-34 | 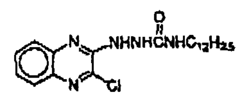 |
| D-30 | 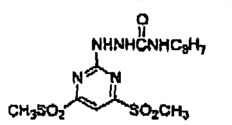 | D-35 | 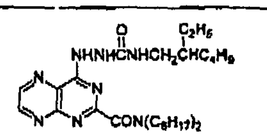 |

| | | | |
|---|---|---|---|
| D-36 | 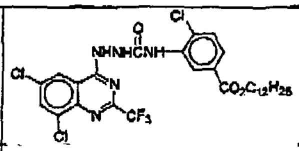 | D-40 | 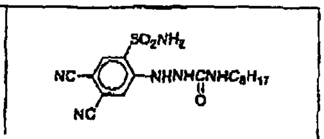 |
| D-37 | 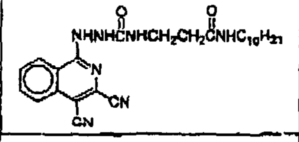 | D-41 | 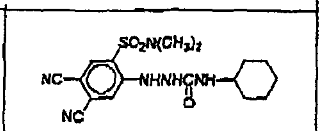 |
| D-38 | 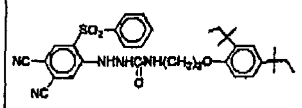 | D-42 | 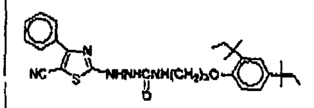 |
| D-39 | 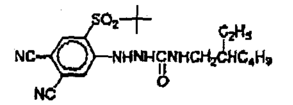 | D-43 | 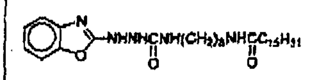 |

Monochrome processing and color processing usually employed in the field of the silver halide photosensitive material can be applied to processing of the silver halide hologram material. Specific preferable examples of processing steps for the silver halide hologram material are listed below. However, the processing is not limited thereto.
color development - bleaching - fixing - water washing - stabilization - drying
color development - bleaching -- fixing -- water washing -- stabilization - drying
color development - bleaching - fixing -- stabilization - drying
color development - bleaching - fixing - stabilization - drying
color development - bleaching - fixing -- water washing -- drying
color development - bleaching - fixing - water washing - drying
color development -- bleaching -- fixing -- water washing -- water washing -- drying

The desilvering step constituted of bleaching and fixing may be any one of bleach-fixing, bleaching - bleach-fixing, and bleach-fixing -- fixing, Meanwhile, monochrome development and reversing may be performed as a pre-process of the color development.

By reference to the following formula, there will be described the principle and a reaction formula of the above-described case where the organic refractive index-modulating agent is 1) the refractive index-modulating coupler which can modulate a refractive index by means of coupling reaction with an oxidized form of a developing agent during a development process and, thereafter, the modulating agent is desilvered and recovered into a processing solution..

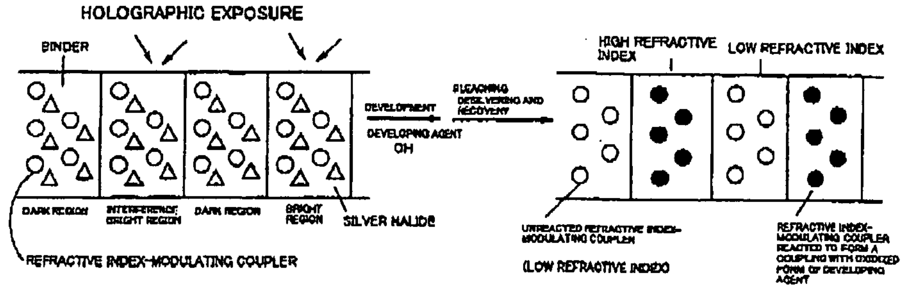


<HOLOGRAPH REGORDING MATERIAL>

<EXAMPLE REACTION IN INTERFERENCE BRIGHT REGION>

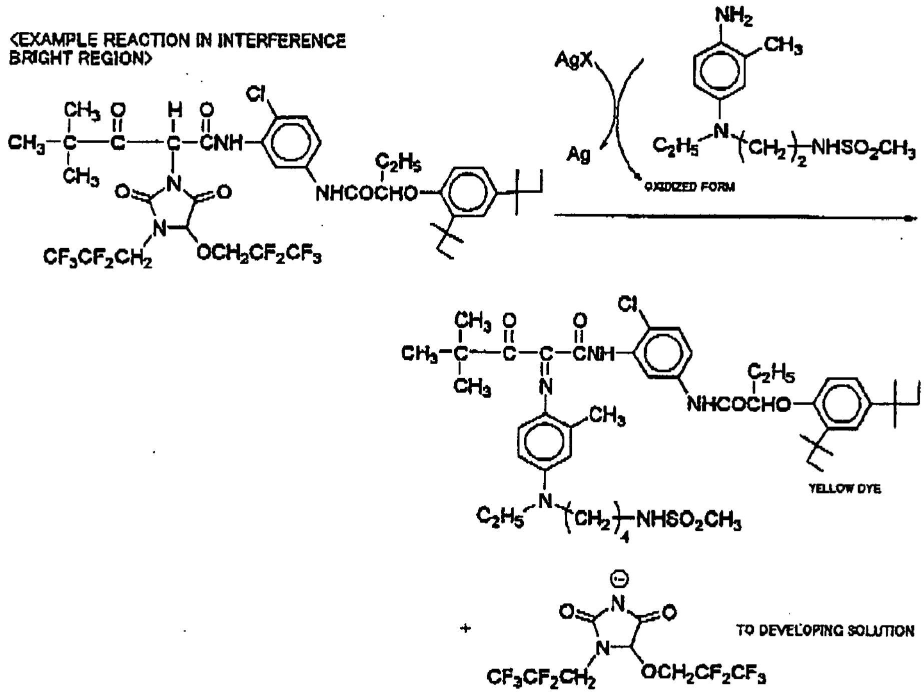


Next will be described the case where the organic refractive index-modulating agent is 2) the high (low) refractive index compound-releasing agent which can release a high refractive index compound or a low refractive index compound during development process.

The high (low) refractive index compound-releasing agent of the invention is preferably represented by formula (2-1), (2-2), or (2-3).

Formula (2-1)

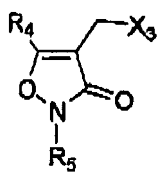

Formula (2-2)

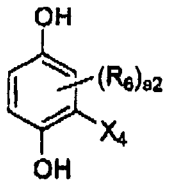

Formula (2-3)

$$X_5 \text{-}\!\left(CR_7{=}CR_8\right)_{a3}\text{-}NHSO_2\text{-}X_6$$

In formula (2-1), $R_4$ represents an alkyl group, an alkenyl group, a cycloalkyl group, an aryl group, or a heterocyclic group (preferable examples of these groups are the same as those listed for $R_1$), preferably an alkyl group or an aryl group, more preferably a methyl group, a t-butyl group, or a phenyl group.

$R_5$ represents an aryl group or a heterocyclic group (preferable examples of these groups are the same as those listed for $R_1$); preferably a phenyl group; more preferably a phenyl group whose 2-position is substituted with a nitro group, a cyano group, an alkoxycarbonyl group, or a halogen atom, and, in addition, whose 4-position is substituted

with a carbamoyl group or a sulfamoyl group.

$X_3$ represents a releasing group to be released during a development process, and preferably represents a halogen atom, an alkoxy group, an aryloxy group, an alkylthio group, an arylthio group (preferable examples thereof are the same as those listed for $R_1$), or a sylfin group.

When a compound represented by formula (2-1) is a high refractive index compound-releasing agent, the compound preferably includes at least an aryl group, an aromatic heterocyclic group, a bromine atom, or an iodine atom at $X_3$. When a compound represented by formula (2-1) is a low refractive index compound-releasing agent, the compound preferably has at least a fluorine atom at $X_3$.

Preferable examples of the high (low) refractive index compound-releasing agent of the invention represented by formula (2-1) are listed below. However, the invention is not limited thereto.

| | | $R_{61}$ | $X_{66}$ |
|---|---|---|---|
| 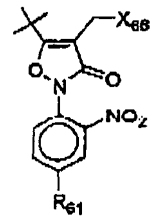 | R-1 | 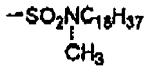 | 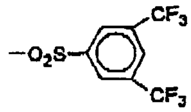 |
| | R-2 | " | $-O_2SC_8F_{17}$ |
| | R-3 | " | 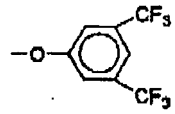 |
| | R-4 | " | $-OCH_2CH_2C_6F_{13}$ |
| | R-5 | " | -F |
| | R-6 | " | -I |
| | R-7 | " | 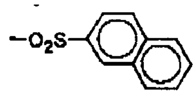 |
| | R-8 | " | 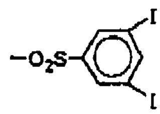 |
| | R-9 | " | 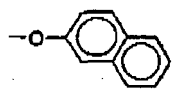 |
| | R-10 | " | 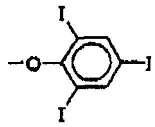 |
| | R-11 | " | 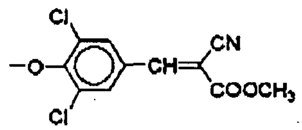 |
| | R-12 | 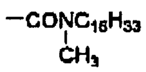 | $-O_2SC_8F_{17}$ |
| | R-13 | " | 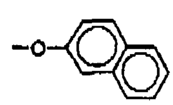 |

Meanwhile, when the Mogram recording material of the invention has the high (low) refractive index compound-releasing agent represented by formula (2-1), preferably the hologram recording material of the invention further contains

a reduction agent. Preferable examples of the reduction agent include hydroquinone derivatives, pyrazolidinone derivatives, and alcohol derivatives.

Preferable examples of this reduction agent are listed below. However, the invention is not limited thereto.

H-1

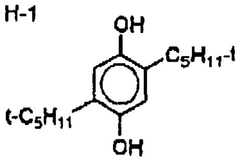

H-2

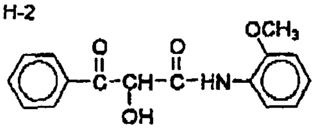

H-3

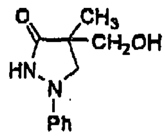

H-4

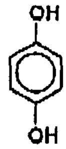

The high (low) refractive index compound-releasing agent represented by formula (2-1) is a compound capable of releasing $X_3$ through one-electron reduction as shown in the above-described principle and reaction.

Hence, the following method for attaining hologram recording is adopted. A silver halide undergoes sensitization in accordance with interference fringes through holographic exposure, to thus form a latent image, and is thereafter subjected to a development process with an alkali. As a result, at an interference bright region where the silver halide is sensitized, only oxidization of a reduction agent, such as a hydroquinone derivative, occurs; and a high (low) refractive index-modulating agent represented by formula (2-1) undergoes no reaction. In contrast, at the interference dark region where the silver halide is not sensitized, electron transfer from a dissociated form of the remaining reduction agent, such as the hydroquinone derivative, occurs, thereby releasing $X_3$, which is the high (low) refractive index compound. Thus, interference fringes formed by refractive index modulation are recorded, to thereby attain hologram recording.

By reference to a drawing and formulae, there will now be described the principle and a reaction formula of the above-described case where the organic refractive index-modulating agent is 2) the high (low) refractive index compound-releasing agent which is represented by formula (2-1) and which can release a high refractive index compound or a low refractive index compound during a development process, where the hydroquinone derivative is subsequently used, and the agent is thereafter desilvered and recovered into a processing solution.

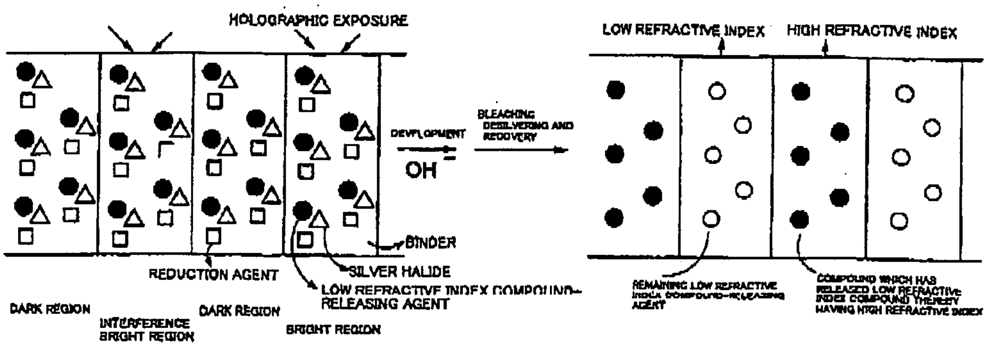


<HOLOGRAM REGORDING MATERIAL>

<REACTION IN INTERFERENCE BRIGHT REGION>

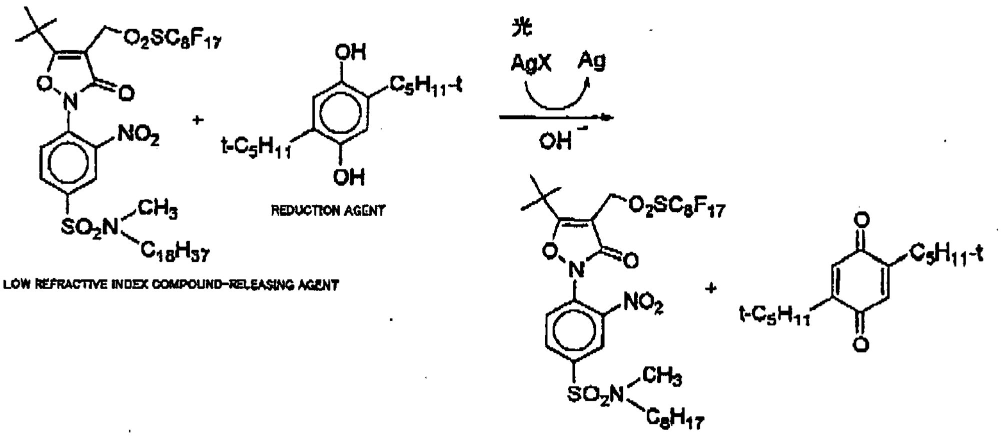


NO CHANGE

<REACTION IN INTERFERENCE DARK REGION>

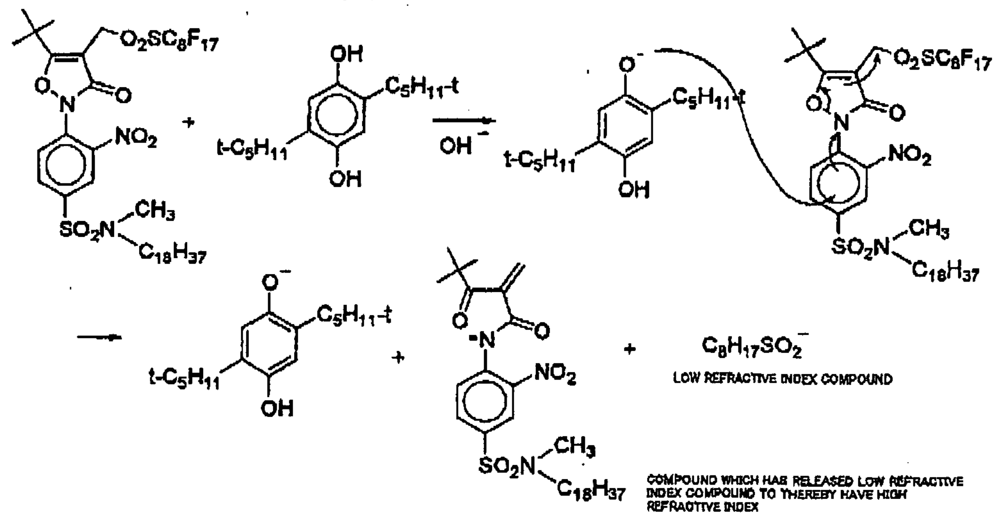


Next, the high (low) refractive index compound-releasing agent represented by formula (2-2) will be described.

In formula (2-2), $R_6$ represents a substituent (preferable examples thereof are the same as those listed for $R_1$), preferably an alkyl group, aryl group, an alkoxy group, an aryloxy group, a halogen atom, an alkoxycarbonyl group, a carbamoyl group, or a cyano group.

a2 is an integer from 0 to 3, preferably 1 or 2. When a2 is 2 or larger, the plurality of $R_6$'s may be the same or different from each other, and may be linked together to thus form a ring. Preferable examples of the ring to be formed include a benzene ring, a naphthalene ring, and a cyclohexene ring.

$X_4$ represents a releasing group which is to be released during a development process, and preferably represents a halogen atom, an alkoxy group, an aryloxy group, an alkylthio group, an arylthio group, an alkylsufonyl group, or a

arylsulfonyl group (preferable examples thereof are the same as those listed for $R_1$), more preferably an alkoxy group, an aryloxy group, an alkylthio group, or an arylthio group.

When a compound represented by formula (2-2) is a high refractive index compound-releasing agent, the compound preferably includes at least an aryl group, an aromatic heterocyclic group, a bromine atom, or an iodine atom at $X_4$. When a compound represented by formula (2-1) is a low refractive index compound-releasing agent, the compound preferably has at least a fluorine atom at $X_4$

In formula (2-3), each of $X_5$ and $X_6$ independently represents an -OH group or an -NHR$_{16}$ group, wherein $R_{15}$ represents a hydrogen atom, an alkyl group, an alkenyl group, a cycloalkyl group, an aryl group, or a heterocyclic group (preferable examples of these groups are the same as those listed for $R_1$), preferably a hydrogen atom, an alkyl group, or an aryl group. Each of $R_7$ and $R_8$ represents a hydrogen atom or a substituent (preferable examples of these are the same as those listed for $R_1$), preferably a hydrogen atom, an alkyl group, an aryl group, or a hydroxyl group. $R_7$ and $R_8$ may be linked together to thus form a ring, and preferable examples of a ring to be formed include a benzene ring, a naphthalene ring, an indole ring, and a pyrazole ring.

a3 is an integer from 0 to 5. When a3 is 2 or larger, the plurality of $R_7$'s and $R_8$'s may be the same or different from each other.

Preferable examples of the high (low) refractive index compound-releasing agent of the invention represented by formulae (2-2) and (2-3) arc described below. However, the invention is not limited thereto.

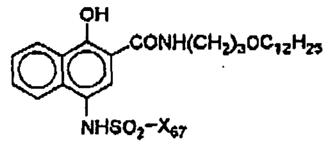

$X_{67}$

DR-1 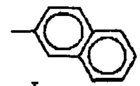

DR-2 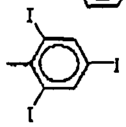

DR-3 $-C_8F_{17}$

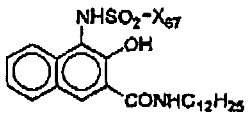

$X_{67}$

DR-4 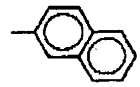

DR-5 $-C_6F_{13}$

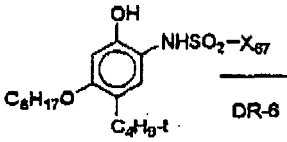

$X_{67}$

DR-6 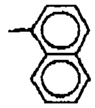

DR-7 $-C_8F_{17}$

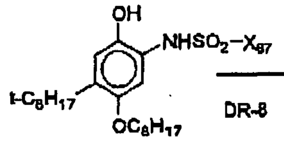

$X_{67}$

DR-8 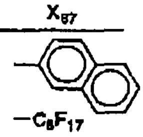

DR-9 $-C_8F_{17}$

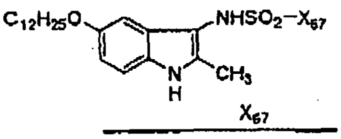

$X_{67}$

DR-10 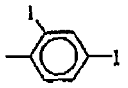

DR-11 $-CH_2C_6F_{13}$

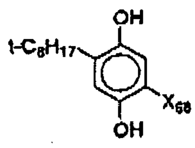

$X_{68}$

DR-12 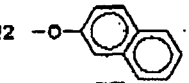

DR-13 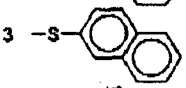

DR-14 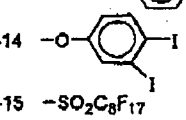

DR-15 $-SO_2C_8F_{17}$

DR-16 $-OCH_2C_6F_{13}$

DR-17 $-SCH_2CH_2C_6F_{13}$

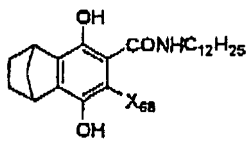

$X_{68}$

DR-18 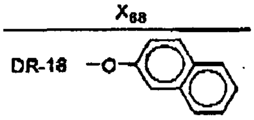

DR-19 $-OCH_2CH_2C_6F_{13}$

DR-20 $-SO_2C_8F_{17}$

Meanwhile, when the hologram recording material of the invention has the high (low) refractive index compound-releasing agent represented by formulae (2-2) and (2-3), preferably the hologram recording material of the invention further contains a nucleophilic reagent in the hologram recording material or a developing solution; more preferably in the developing solution. Preferable examples of the nucleophilic reagent include a hydroxide ion, a sulphite ion, a thiosulfate ion, and $R_{19}CON(CH_3)OH$, wherein $R_{19}$ represents an alkyl group or an aryl group. More preferably, the nucleophilic reagent is a hydroxide ion or $R_{19}CON(CH_3)OH$.

Hence, the following method for attaining hologram recording is adopted. A silver halide undergoes sensitimtion in accordance with interference fringes through holographic exposure, to thus form a latent image, and is thereafter subjected to a development process. As a result, at an interference bright region, where the silver halide is sensitized, the high (low) refractive index compound-releasing agent represented by formulas (2-2) or (2-3) is oxidized and thereafter attacked by the nucleophilic reagent, thereby releasing $X_4$, or the like, which is a high (low) refractive index compound. In contrast, no reaction occurs at au interference dark region, where the silver halide is not sensitized. Thus, interference fringes are recorded by means of refractive index modulation.

The principle and a reaction formula of the above-described case where the organic refractive index-modulating agent is 2) the high (low) refractive index compound-releasing agent which is represented by formula (2-2) or (2-3) and which can release a high refractive index compound or a low refractive index compound during a development process,

where a nucleophilic reagent is further employed, and the agent is thereafter desilvered and recovered into a processing solution will be described in the following formula, and the like.

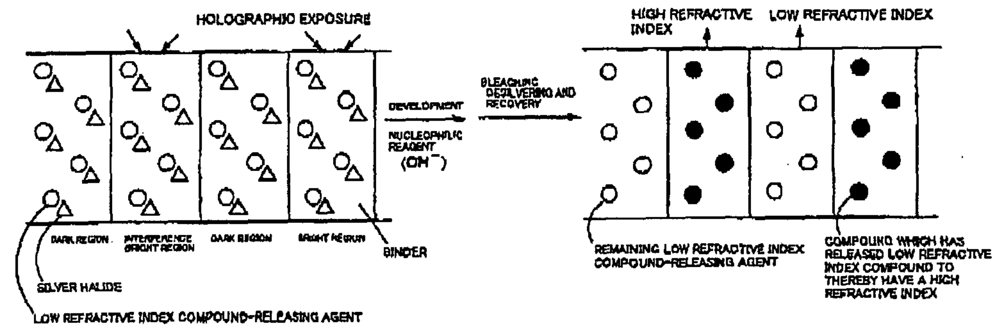


<REACTION IN INTERFERENCE BRIGHT REGION>

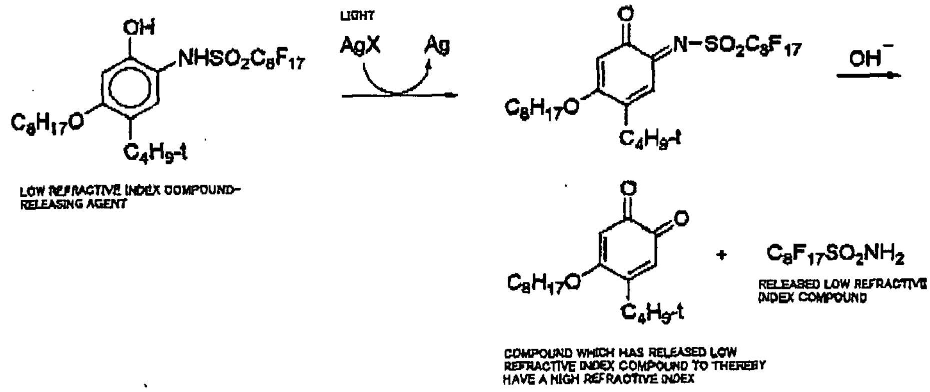


Next, the case where the organic refractive index-modulating agent is 3) the polymerizable compound capable of undergoing polymerization during a development process, thereby modulating a refractive index will be described.

Because of having a refractive index which differs from that of the binder, the polymerizable compound can record interference fringes by means of refractive index modulation. More specifically, the following method is adopted. A silver halide undergoes sensitization in accordance with interference fringes through holographic exposure, to thus form a latent image, and is thereafter subjected to a development process. At this time, polymerization primarily caused by the polymerizable compound occurs in the vicinity of the silver halide having been sensitized in an interference bright region; and, in contrast, an area in the vicinity of non-sensitized silver halide in an interference dark region is dominated by the binder. As a result, interference fringes can be recorded by means of the refractive index modulation.

A polymerizable compound of the invention will now be described in detail.

Apolymerizable compound of the invention preferably has a refractive index higher or lower than that of the binder. For enhancement of modulation of the refractive index, the refractive index difference between the polymerizable compound and the binder is preferably large in a bulk sample, preferably 0.01 or larger, more preferably 0.05 or larger, still more preferably 0.1 or larger.

Therefore, preferably, one of the polymerizable compound and the binder includes at least a single aryl group, aromatic heterocyclic group, chlorine atom, bromine atom, iodine atom, or sulfur atom, and the other does not contain the thus-included group or atom.

Since a binder preferably employed in the invention is gelatin, the polymerizable compound for use in the invention preferably has a refractive index higher than that of the gelatin or lower than that of gelatin. In a case where the polymerizable compound has a refractive index higher than that of the gelatin, the polymerizable compound preferably includes at least a single aryl group, aromatic heterocyclic group, chlorine atom, bromine atom, iodine atom, or sulfur atom. In a case where the polymerizable compound has a refractive index lower than that of the gelatin, the polymerizable compound does not includes an aryl group, aromatic hetero group, chlorine atom, iodine atom and sulfur atom but preferably includes a fluorine atom.

The polymerizable compound of the invention may perform electron transfer with a silver halide to be developed

during development, thereby directly causing addition polymerization, and being formed into an oligomer or a polymer. In this case, the polymerizable compound is preferably a radical-polymerizable compound,

Alternatively, in addition to including the polymerizable compound, a hologram recording material preferably contains a polymerization initiator, and the polymerization initiator is preferably activated by means of electron transfer between a silver halide and the polymerization initiator, thereby initiating polymerization of the polymerizable compound. In this case, the polymerization initiator may be any one of a radical polymerization initiator, a cationic polymerisation initiator, and an aniomic polymerization initiator; and the polymerizable compound may be any one of a radical-polymerizable compound, a cationic-polymerizable compound, and an anionic polymerizable compound.

The polymerizable compound of the present invention may be either a monofunctional compound or a polyfunctional compound; may lightonocomponent compound or a multicomponent compound; and may be either a monomer, a prepolymer (e.g., a dimer or an oligomer), or a mixture thereof. However, the polymerizable compound is preferably a monomer.

The form of the polymerizable compound of the present invention may be either liquid or solid at room temperature; and is preferably liquid whose boiling point is 100°C or higher, or a mixture of a liquid monomer whose boiling point is 100°C or higher and a solid monomer.

The polymerizable compounds of the present invention are roughly classified into polymerizable compounds capable of radical polymerization, and polymerizable compounds capable of cationic or anionic polymerization.

Specific preferable examples of a radical-polymerizable compound having a high refractive index are described below. However, the invention is not limited thereto.

More specifieally, the examples include a polymerizable monomer which contains at least a single aryl group, aromatic heterocyclic group, chlorine atom, bromine atom, iodine atom, or sulfur atom; and a prepolymer (e.g., a dimer or an oligomer) formed therefrom.

The radical polymerizable monomer having a high refractive index is preferably styrene, 2-chlorostyrene, 2-bromostyrene, methoxystyrene, phenyl acrylate, ρ-chlorophenyl acrylate, 2-phenylethyl acrylate, 2-phenoxyethyl acrylate, 2-phenoxyethyl methacrylate, 2-(ρ-chlorophenoxy)ethyl acrylate, benzyl acrylate, 2-(1-naphthyloxy)ethyl acrylate, 2,2-di(ρ-hydroxyphenyl)propane diacrylate or dimethacrylate, di(2-methacryloxyethyl)ether of bisphenol-A, di(2-acryloxyethyl)ether of bisphenol-A, di(2-methacryloxyethyl)ether of tetrachlorobisphenol-A, di(2-methacryloxyethyl)ether of tetrabromo-bisphenol-A, 1,4-benzenediol dimethacrylate, 1,4-diisopropenylbenzene, 4-carboxylphenyl acrylate, 4-sulfophenyl acrylate, or the like; more preferably 2-phenoxyethyl acrylate, 2-phenoxyethyl methacrylate, 2-(p-chloropheaoxy)ethyl acrylate, p-chlorophenyl acrylate, phenyl acrylate, 2-phenylethyl acrylate, di(2-acryloxyethyl)ether of bisphenol-A, 2-(1-naphthyloxy)ethyl acrylate, 4-carboxylphenyl acrylate, 4-sulfophenyl acrylate, or the like.

Next, preferable specific examples of the radical-polymerizable compound having low refractive index include, but are not limited to, the following compounds. Specifically, polymerizable monomers not containing an aryl group, aromatic heterocyclic group, chlorine atom, bromine atom, iodine atom, sulfur atom, etc., and prepolymers composed of them (dimer, oligomer, etc.), are mentioned. The radical-polymerizable monomer of low refractive index includes, preferably, acrylic acid, methyl acrylate, t-butyl acrylate, cyclohexyl acrylate, isonorbornyl acrylate, 1,5-pentanediol diacrylate, N,N-diethylaminoethyl acrylate, ethylene glycol diacrylate, 1,4-butanediol diacrylate, diethylene glycol diacrylate, hexamethylene glycol diacrylate, 1,3-propanediol diacrylate, decamethylene glycol diacrylate, 1,4-cyclohexyldiol diacrylate, 2,2-dimethylolpropane diacrylate, glycerol diacrylate, trimethylolpropane diacrylate, pentaerythritol triacrylate, polyoxyethylated trimethylolpropane triacrylate and trimethacrylate, and analogous compounds disclosed in US Patent No. 3380831, pentaerythritol tetraacrylate, triethylene glycol diacrylate, triethylene glycol dimethacryalte, polyoxypropyltrimethylolpropane diacryalte, mothacrylic acid, methyl methacrylate, ethylene glycol dimethacrylate, butylene glycol dimethacrylate, 1,3-propanediol dimethacrylate, 1,2,4-butanetriol trimethacrylate, 2,2,4-trimethyl-1,3-propanediol dimethacrylate, pentacrythritol trimethacrylate, pentacrythritol tetramethacrylate, trimethylolpropane trimethacrylate, 1,5-pentanediol dimethacrylate, diallyl fumarate, 1H,1H-perfluorooctyl acrylate, 1H,1H,2H,2H-perfluorooctyl methacrylate, acrylamide, methacrylamide, acrylamide-2-methylpropanesulfonic acid, vinyl acetate, vinylpyrrolidone, bicyclobutane-1-carbonitrile, 1,1,2,2,3,3-hexafluoropropyl acrylate, 2,2,3,3,4,4,5,5-octafluoropentyl acrylate, etc.

The polymerizable compound is preferably liquid, and the liquid may be used in the form of a mixture with a second solid polymerizable compound, such as N-vinylcarbazole, 2-naphthyl acrylate, pentachlorophenyl acrylate, 2,4,6-tribromophenyl acrylate, bisphenol-A diacrylate, 2-(2-naphthyloxy)ethyl acrylate, or N-phenylmaleimide.

The cationic polymerizable compound and the anionic polymerizable compound preferably employed in the present invention will now be described.

The cationic polymerizable compound of the invention is a compound whose polymeraization reaction is initiated by an acid generated from a cationic polymerization initiator; and the anionic polymerizable compound of the invention is a compound whose polymeraization reaction is initiated by a base generated from an anionic polymerization initiator.

The cationic polymerizable compound of the invention is preferably a compound having at least a single oxirane ring, oxetane ring, vinyl ether group, styryl group, N-vinylcarbazole moiety, or stylene moiety within the molecule; more preferably a compound having an oxirane or oxetane ring moiety.

The anionic polymerizable compound of the invention is preferably a compound having at least a single oxirane ring, oxetane ring, vinyl ether group, styryl group, N-vinylcarbazole moiety, ethylenic double-bond moiety provided with an electron-withdrawing substituent, lactone moiety, lactam moiety, cyclic urethane moiety, cyclic urea moiety, or cyclic siloxane moiety within the molecule; more preferably a compound having an oxirane ring moiety.

Specific preferable examples of a cationic-polymerizable or an anionic-polymerizable compound having a high refractive index are described below. However, the invention is not limited thereto.

More specifically, the examples include a polymerizable monomer which contains at least a single aryl group, aromatic heterocyclic group, chlorine atom, bromine atom, iodine atom, or sulfur atom, and a prepolymer (e.g., a dimer or an oligomer) formed therefrom.

Preferable examples of the cationic or anionic polymerizable monomer having an oxirane ring and having a high refractive index include phenylglycidyl ether, diglycidyl phthalate, triglycidyl trimellitate, resorcin diglycidyl ether, dibromophenylglycidyl ether, dibromoneopentyl glycol diglycidyl ether, 4,4'-bis(2,3-epoxypropoxy-perfluoroisopropyl) diphenyl ether, ρ-bromostyrene oxide, bisphenol-A-diglycidyl ether, tetrabromo-bisphenol-A-diglycidyl ether, bisphenol-F-diglycidyl ether, and 1,3-bis(3',4'-epoxycyclohexyl)ethyl)-1,3-diphenyl-1,3-dimethyl-disiloxane.

Specific examples of the cationic or anionic polymerizable monomer having an oxetane ring and having a high refractive index include the forgoing specific examples of the cationic or anionic polymerizable monomer having an oxirane ring and a high refractive index, whose oxirane ring is replaced by an oxetane ring.

Specific examples of the cationic or anionic polymerizable monomer having a vinyl ether group moiety and a high refractive index include vinyl-2-chloroethyl ether, 4-vinyl ether styrene, hydroquinone divinyl ether, phenylvinyl ether, bisphenol A divinyl ether, tetrabromo-bisphenol A divinyl ether, bisphenol F divinyl ether, phenoxyethylene vinyl ether, and p-bromophenoxyethylene vinyl ether.

In addition, an N-vinylcarbazole derivative is also preferable as the cationic and anionic polymerizable monomer having a high refractive index.

In addition, a styrene derivative, such as styrene, 2-chrolostyrene, 2-bromostyrene, or methoxystyrene, is also preferable as the cationic and anionic polymerizable monomer having a high refractive index.

Next, preferable specific examples of the cationic polymerizable or anionic polymerizable compound having a low refractive index include, but are not limited to, the following compounds. Specifically, polymerizable monomers not containing an aryl group, aromatic heterocyclic group, chlorine atom, bromine atom, iodine atom, sulfur atom, etc., and prepolymers composed of them (dimer, oligomer, etc.), are mentioned. The cationic polymerizable or anionic polymerizable monomer of low refractive index having an oxiranc ring includes, preferably, glycerol diglycidyl ether, glycerol triglycidyl ether, diglycerol triglycidyl ether, diglycerol polyglycidyl ether, pentaerythritol polyglycidyl ether, 1,4-bis(2,3-epoxypropoxy perfluoroisopropyl)cyclohexane, sorbitol tetraglycidyl ether, trimethylolpropane diglycidyl ether, trimethylolpropane monoglycidyl ether, trimethylolpropane triglycidyl ether, 1,6-hexanediol diglycidyl ether, ethylene glycol diglycidyl ether, ethylene glycol monoglycidyl ether, polyethylene glycol diglycidyl ether, propylene glycol diglycidyl ether, propylene glycol monoglycidyl ether, neopentyl glucol diglycidyl ether, neopentyl glucol monoglycidyl ether, diglycidyl ester adipate, 1,2,7,8-diepoxyoctane, 1,6-dimethylol perfluorohexane diglycidyl ether, vinylcyclohexene dioxide, 3,4-epoxycyclohexylmethyl-3',4'-epoxycyclohexane carboxylate, 3,4-epoxycyclohexyloxyrane, bis(3,4-epoxycyclohexyl) adipate, bis(3,4-epoxy-6-methyl-cyclohexylmethyl) adipate, 2,2-bis[4-(2,3-epoxypropoxy)cyclohexyl]propane, 2,2-bis [4-(2,3-epoxypropoxy)cyclohexyl]hexafluoropropane, 1,2,5,6-diepoxy-4,7-methanoperhydroindene, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methyloyclohexylmethyl-4,5-epoxy-2-methyleyelohexane carboxylate, ethylene glycol bis(3,4-epoxycyclohexane carboxylate), bis-(3,4-epoxycyclohexylmethyl) adipate, di-2,3-epoxycyclopentyl ether, vinyl glycidyl ether, allyl glycidyl ether, 2-ethylhexyl glycidyl ether, 2,3-bis-(3',4'-epoxycyclohexylethyl)-1,1,3,3-tetramethyldisiloxane, etc.

As specific examples of the cationic polymerizable or anionic polymerizable monomer of low refractive index having an oxetane ring, compounds obtained by substituting an oxirane ring of the above-mentioned cationic polymerizable or anionic polymerizable monomer of low refractive index having an oxirane ring by an oxetane ring, etc., are mentioned.

Specific examples of the cationic polymerizable or anionic polymerizable monomer of low refractive index having a vinyl ether group portion include vinyl-n-butyl ether, vinyl-t-butyl ether, ethylene glycol divinyl ether, ethylene glycol monovinyl ether, propylene glycol divinyl ether, propylene glycol monovinyl ether, neopentyl glycol divinyl glycol, neopentyl glycol monovinyl glycol, glycerol divinyl ether, glycerol trivinyl ether, triethylene glycol divinyl ether, trimethylolethane trivinyl ether, trimethylolpropane monovinyl ether, trimethylolpropane divinyl ether, trimethylolpropane trivinyl ether, diglycerol trivinyl ether, sorbitol tetravinyl ether, allyl vinyl ether, 2,2-bis(4-cyclohexanol)propane divinyl ether, 2,2-bis(4-cyclohexanol)trifluoropropane divinyl ether, 1,4-cyclohexanedimethanol divinyl ether, etc.

As the polymerization initiator for use in the invention, there is preferably employed a radical polymerization initiator (a radical-generating agent) based on a ketone, an organic peroxide, a trihalomethyl-substituted triazine, a diazonium salt, a diaryl iodonium salt, a sulfonium salt, a borate, a diaryl iodonium organic boron complex, a sulfonium organic boron complex, a cationic sensitizing dye organic boron complex, an anionic sensitizing dye onium salt complex,

a metal arene complex, or a sulfonate ester, a cationic polymerization initiator (an acid-generating agent) thereof; or a compound having the functions of the both.

Specific examples of the polymerization initiator, the polymerizable compound, and the binder include those described in, e.g., JP-A-2004-238392.

Specific examples of the anionic polymerization initiator (base-generating agent) include those described in, e.g., JP-A-2003-178083.

Preferable specific examples of the polymerization initiator of the invention are listed below. However, the invention is not limited thereto.

<RADICAL POLYMERIZATION INITIATOR (RADICAL-GENERATING AGENT), CATIONIC POLYMERIZATION INITIATOR (ACID-GENERATING AGENT)>

I-1

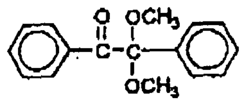

I-2

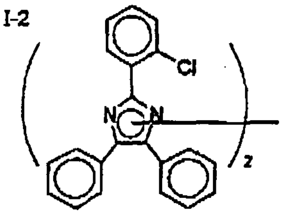

I-3

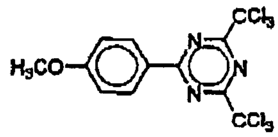

I-4

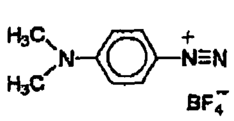

I-5

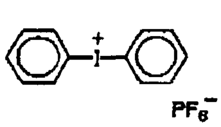

I-6

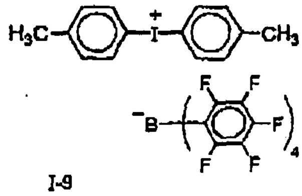

I-7

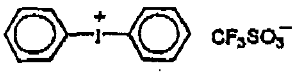

I-8

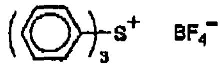

I-9

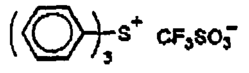

I-10

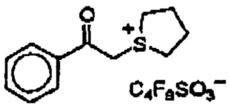

I-11

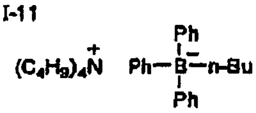

I-12

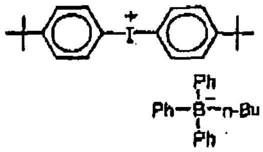

I-13

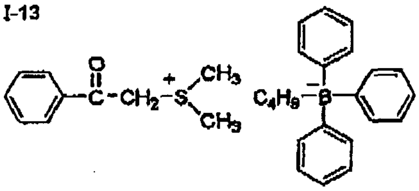

I-14

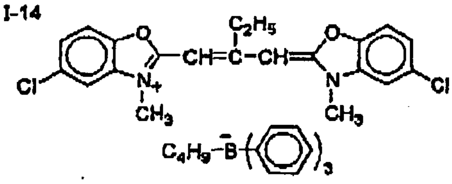

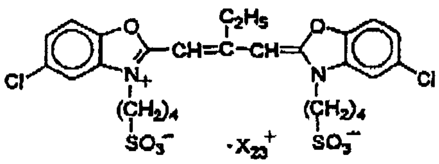

| | $X_{23}^+$ | |
|---|---|---|
| I-15 | 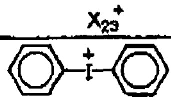 | (=C-1) |
| I-16 | 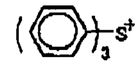 | (=C-2) |
| I-17 | 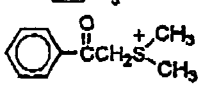 | (=C-3) |

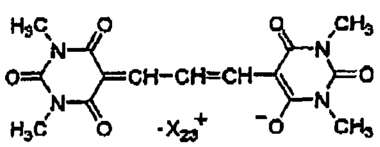

| | $X_{23}^+$ |
|---|---|
| I-18 | C-1 |
| I-19 | C-2 |
| I-20 | C-3 |

I-21
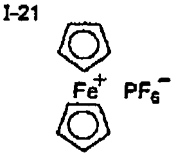
I-22
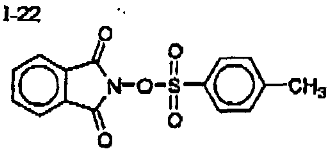
I-23
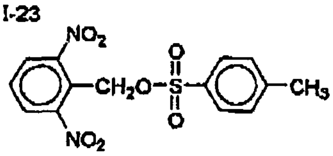

ANIONIC POLYMERIZATION INITIATOR (BASE-GENERATING AGENT)

PB-1
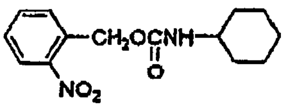
PB-2
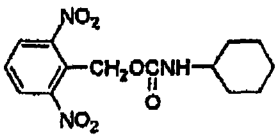
PB-3
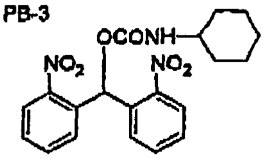
PB-4
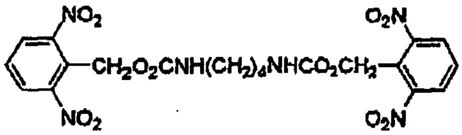
PB-5
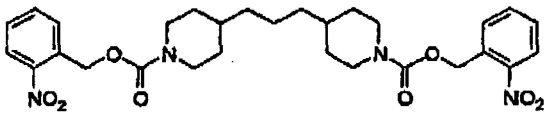
PB-6
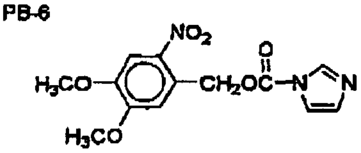
PB-7
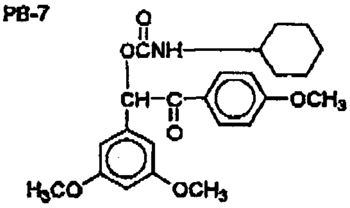
PB-8
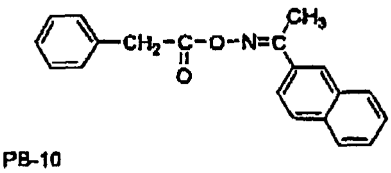
PB-9
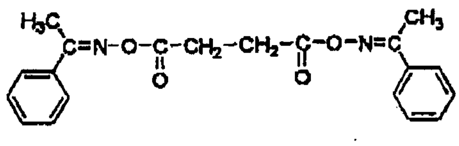
PB-10
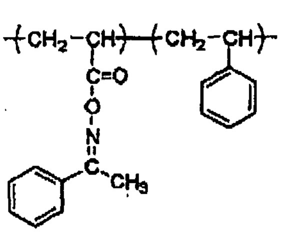
PB-11
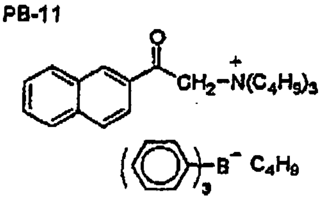
PB-12
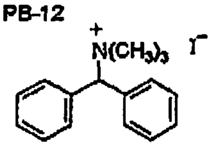

By reference to Fig. 1, there will now be described the principle of the above-described case where the organic refractive index-modulating agent is 3) the polymerizable compound capable of polymerization during a development process, thereby modulating a refractive index, a polymerization initiator is further employed, and the modulating agent is thereafter desilvered and recovered into a processing solution.

Subsequently, there will be described the case where the organic refractive index-modulating agent of the invention is 4) the bubble-generating agent capable of generating bubbles during a development process.

A bubble-generating agent of the invention is a compound which can decrease a refractive index by means of generating bubbles. More specifically, the following method is adopted. A silver halide undergoes sensitization in accordance with interference fringes through holographic exposure, to thus form a latent image, and is thereafter subjected to a development process. At this time, generation of bubbles primarily from the bubble-generating agent occurs in the vicinity of the silver halide having been sensitized in an interference bright region, and the refractive index is lowered.

In contrast, an area in the vicinity of the non-sensitized silver halide in an interference dark region does not undergo such generation of bubbles. Hence, recording of interference fringes can be attained by means of the refractive index modulation.

The bubble-generating agent of the invention is preferably a compound which can generate bubbles by means of electron transfer with a silver halide during the development process.

At this time, bubbles of an arbitrary gas may be generated. However, the gas is preferably any of $N_2$, CO, $CO_2$, $SO_2$, $SO_3$, $N_2O$, $O_2$, NO, $NO_2$, $H_2$, $NH_3$, and i-$C_4H_8$; more preferably $N_2$, CO, $CO_2$, $SO_2$, $SO_3$, $NO_2$, $O_2$, and i-$C_4H_8$; still more preferably $N_z$, CO, $CO_2$, $SO_2$, $SO_3$, and i-$C_4H_8$; most preferably $N_2$ and $CO_2$.

The bubble-generating agent of the invention is preferably represented by formula (3-1) or (3-2).

Formual (3-1)

$$R_{13}-G-R_{14}$$

Formula (3-2)

$$R_{15}-N\equiv\overset{+}{N} \quad X_{11}^{-}$$

In formula (3-1), each of $R_{13}$ and $R_{14}$ independently represents a hydrogen atom or a substituent (preferable examples thereof are the same as those listed for $R_1$), and preferably represents an alkyl group, an alkenyl group, a cycloalkyl group, an aryl group, a heterocyclic group, an alkoxy group, an aryloxy group, or an amino group. $R_{13}$ and $R_{14}$ may be linked together to thus form a ring.

In formula (3-1), G represents any one of -N=N-, -C(O)-, -OC(O)-, -OS(O)-, $-S(O)_2-$, and $-OS(O)_2-$; more preferably any one of -N=N-, -OC(O)-, $-S(O)_2-$, and $-OS(O)_2-$; still more preferably -N=N- or -OC(O)-,

In formula (3-2), $R_{15}$ represents an aryl group or a heterocyclic group (preferable examples thereof are the same as those listed for $R_1$).

When $R_{15}$ is an aryl group, the aryl group may be fused and/or include a substituent group. Preferable examples of the substituent include the examples of the substituent described for $R_1$. When $R_{15}$ is an aryl group, the aryl group is preferably unsubstituted or a phenyl group which may be substituted.

When $R_{15}$ is a heterocyclic group, the heterocyclic group may be fused, and/or include a subsdtuent group. Preferable examples of the substituent include the examples of the substituent described for $R_1$. When $R_{15}$ is an heterocyclic group, the heterocyclic group is preferably an aromatic ring; more preferably a pyridine ring, a pyrimidine ring, a triazine ring, a pyrrole ring, a pyrazole ring, an imidazole ring, a thiazole ring, an isothiazole ring, an oxazole ring, an isooxazole ring, a thiophene ring, a furan ring, a thiadiazole ring, an oxadiazole ring, a triazole ring, or a tetrazole ring; still more preferably a pyridine ring, a pyrrole ring, a pyrazole ring, an imidazole ring, a thiazole ring, an isothiazole ring, an oxazole ring, an isoxazole ring, a thiodiazole ring, an oxadiazole ring, or a triazole ring.

In formula (3-2), $X_{11}^-$ represents an anion; and preferable examples of the anion include $F^-$, $Cl^-$, $Br^-$, $I^-$, $OH^-$, $SO_4^{2-}$, $CO_3^{2-}$, $NO_3^-$, $H_2PO_3^-$, $HPO_3^{2-}$, $BF_4^-$, $PF_6^-$, $SbF_6^-$, $ClO_4^-$, trifluoromethanesulfonate, methanesulfonate, bcnzenesulfonate, tosylate, and tetra(pentafluorophenyl)borate.

The bubble-generating agent of the invention is more preferably represented by formula (3-1).

Specific examples of the bubble-generating agent of the invention are provided below. However, the invention is not limited thereto.

A-1

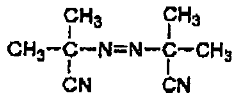

A-2

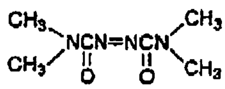

A-3

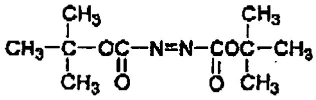

A-4

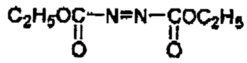

A-5

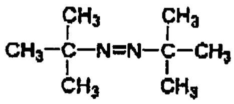

A-6

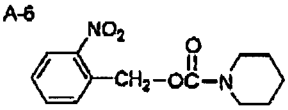

A-7

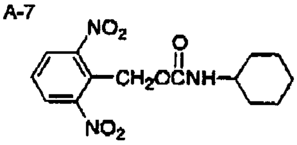

A-8

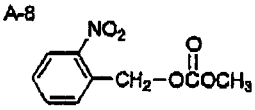

A-9

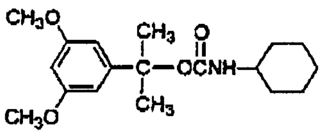

A-10

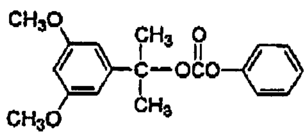

A-11

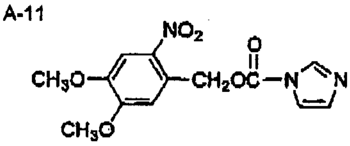

A-12

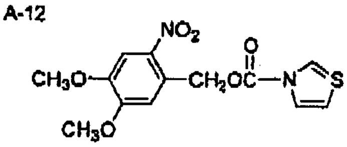

A-13

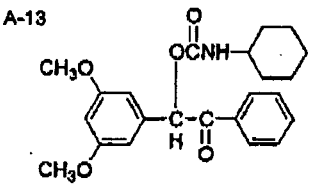

A-14

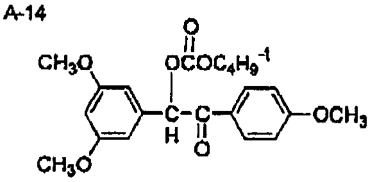

A-15

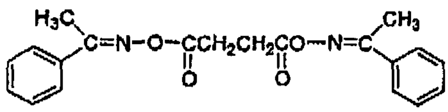

A-16

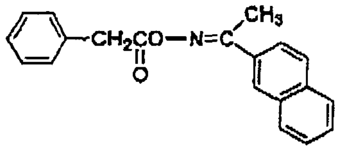

A-17

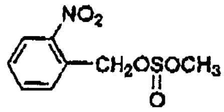

A-18

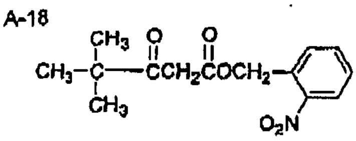

A-19

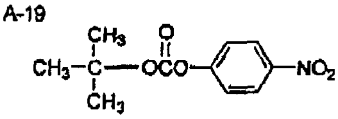

A-20

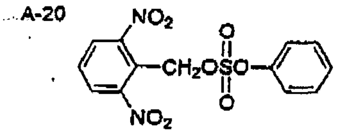

A-21

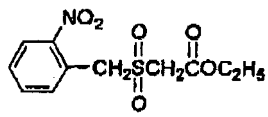

A-22

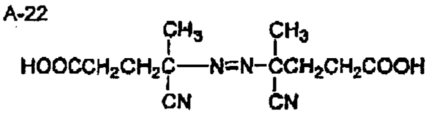

A-23

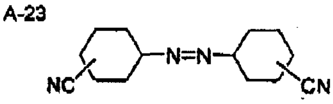

A-24

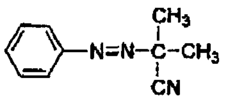

A-25

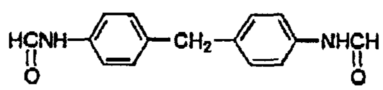

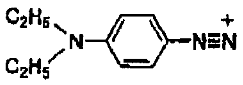 $X_{11}^-$

| | $X_{11}$ |
|---|---|
| A-26 | $BF_4^-$ |
| A-27 | $Cl^-$ |
| A-28 | $H_2PO_4^-$ |

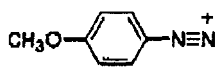 $X_{11}^-$

| | $X_{11}$ |
|---|---|
| A-29 | $BF_4^-$ |
| A-30 | $(SO_4^{2-})_{1/2}$ |
| A-31 | $CH_3SO_3^-$ |

A-32

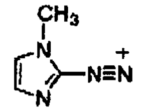 $H_2PO_3^-$

Fig. 2 illustrates the principle of the above-described case where the organic refractive index-modulating agent is 4) the bubble-generating agent capable of generating bubbles during a development process, and the agent is thereafter desilvered and recovered into a processing solution.

The hologram recording material of the invention is preferably employed in volume phase hologram recording.

The organic refractive index-modulating agent used in the present invention can be introduced into a layer of a photosensitive material by known methods such as a method described in US Patent No. 2,322,027. In this case, organic solvents of high boiling point as described in US Patent Nos. 4,555,470, 4,536,466, 4,536,467, 4,587,206, 4,555,476 and 4,599,296, Japanese Published Examined Patent Application No. Hei-3-62,256, etc., can be used, if necessary, together with organic solvents of low boiling point having a builing point of 50 to 160°C. These organic refractive index-modulating agents, organic solvents of high boiling point, etc., can be used in combination of two or more. The amount of organic solvent of a high boiling point is 10 g or less, preferably 5 g or less, more preferably 1 g to 0.1 g based on 1 g of the organic refractive index-modulating agent. It is suitable that this amount is 1 cc or less, further 0.5 cc or less, particularly 0.3 cc or less based on 1 g of a binder. Further, a dispersion method with a polymerized substance described in Japanese Published Examined Patent Application No. Sho-51-39,853 and Japanese Published

Unexamined Patent Application No. Sho-51-59,943, and a method of preparing a fine partcle-dispersed substance and adding this described in Japanese Published Unexamined Patent Application Nos. Sho-62-30,242 and Sho-63-271339, can also be used. In the case of a compound substantially insoluble in water, a method of preparing fine particles of the compound and allowing them to be dispersed and contained in a binder can be used, in addition to the above-mentioned methods. In dispersing a hydrophobic compound in hydrophilic colloid, various surfactants can be used. For example, those listed as a surfactant in Japanese Published Unexamined Patent Application No. Sho-59-157,636, pages 37 to 38, and in RD shown in the following list, can be used. As the photosensitive material of the present invention, compounds intending stabilization of an image simultaneously with activation of development can be used. Specific compounds to be preferably used are described in US Patent No. 4,500,626, columns 51 to 52. The average particle size of the organic refractive index-modulating agent dispersed in a binder by the above-mentioned method is preferably finer for suppressing light scattering during exposure, and specifically, preferably 0.001 to 1.0 μm, further preferably 0.001 to 0.1 μm, most preferably 0.01 to 0.1 μm.

The hologram recording material of the invention is preferably of a non-rewritable type.

The term "non-rewritable type" referred to hereinin indicates a type of recording performed by an irreversible reaction. Once data are recorded, the data can be stored without being rewritten even when an attempt to overwrite the data is made. Accordingly, this type is appropriate for storage of data which are important and require long-term storage. However, as a matter of course, data can be additionally recorded in a region where no data are recorded. In this sense, this type is generally called a "write-once type"

The light to be employed in hologram recording of the invention is preferably any of ultraviolet, visible, and infrared light having a wavelength of 200 to 2,000 nm, more preferably ultraviolet or visible light having a wavelength of 300 to 700 mn, still more preferably visible light having a wavelength nf 400 tn 700 nm

Furthermore, coherent (having the same phase and wavelength) laser light is preferably employed as chemical-actinic radiation in the invention. The laser to be employed may be any one of a group constituting of a solid laser, a semiconductor laser, a gas laser, and a liquid laser. Preferable examples of laser light include a second harmonic of YAG laser (532 nm), a third harmonic of YAG laser (355 nm), a semiconductor laser light—such as a GaN semiconductor laser—of about 400 to 415 nm, a semiconductor laser light of about 650 to 660 nm, an Ar ion laser light of about 488 or 515 nm, an He-Ne laser light of 633 mn, a Kr ion laser light of 647 nm, a ruby laser light of 694 nm, and an He-Cd laser light of 636, 634, 538, 534 or 442 nm.

Alternatively, a pulse laser light on the order of nanoseconds or picoseconds is preferably used.

When the hologram recording material of the invention is used for an optical recording medium, a second harmonic of YAG laser (532 nm), a light of a semiconductor laser—such as a GaN semiconductor laser—of about 400 to 415 nm, or a semiconductor laser light of about 650 to 660 nm is preferably employed.

The wavelength of light to be used for reproduction of a hologram is preferably the same with that of light to be used in holographic exposure (recording), or longer; more preferably the same.

Meanwhile, the refractive index preferably modulates by an amount of 0.00001 to 0.5, more preferably from 0.0001 to 0.3, at the time of recording of interference fringes. Meanwhile, the greater the thickness of the hologram recording material, preferably, the smaller the refractive index modulation. On the contrary, the smaller the thickness of the hologram recording material, preferably, the greater the refractive index modulation.

The (relative) diffraction efficiency η of a hologram recording material is obtained from the following equation:

$$\eta = \text{Idiff/Io} \quad \text{(Equation 1)},$$

wherein Io is intensity of transmitted light having not been diffracted, and Idiff is intensity of light diffracted (transmission type) or reflected (reflection type). The diffraction efficiency is a value within a range of 0 to 100%, preferably 30% or more, more preferably 60% or more, most preferably 80% or more.

The sensitivity of a hologram recording material is generally expressed in terms of exposure per unit area ($mJ/cm^2$). The lower this value, the higher the sensitivity. However, the timing at which the exposure is to be defined as the sensitivity varies greatly between publications and patent specifications. There are included a case of defining the exposure at the start of recording (refractive index modulation); a case of defining the exposure at the timing where a maximum diffraction efficiency (refractive index modulation) is obtained; a case of defining the exposure at the timing where half the maximum diffraction efficiency is obtained; and a case of defining the exposure at the timing where the gradient of diffraction efficiency with respect to the exposure E assumes a maximum value.

According to Kugelnick's theoretical equation, the refractive index modulation Δn at which a certain diffraction efficiency is obtained is inversely proportional to the thickness "d." In other words, the sensitivity required to give a certain diffraction efficiency differs with thickness. The larger the thickness "d," the smaller the required refractive index modulation Δn. Accordingly, the sensitivity cannot be unequivocally compared unless conditions such as thickness become

identical.

In the present invention, the sensitivity is defined as "an exposure (mJ/cm$^2$) at which half the maximum diffraction efficiency is obtained."

The sensitivity of the hologram recording material of the invention is preferably 50 mJ/cm$^2$ or less, more preferably 20 mJ/cm$^2$ or less, still more preferably 10 mJ/cm$^2$ or less, most preferably 1 mJ/cm$^2$.

When the hologram recording material of the invention is adopted to holographic memory as an optical recording medium, a large volume of two-dimensional digital data (referred to as "signal light") is preferably recorded by making use of a spatial light modulation element (SLM), such as a DMD or an LCD. The recording is preferably carried out by multiple-recording so as to enhance recording density. Examples of multiple-recording method include angular multiplexing, phase multiplexing, wavelength multiplexing, and shift multiplexing. The angular multiplexing recording or the shift multiplexing recording is preferably employed. A CCD or DMOS is preferably employed for reading of two-dimensional data to be reproduced.

When the hologram recording material of the invention is adopted to holographic memory as an optical recording medium, employment of multiplex recording is essential for enhancing the capacity (recording density). In this case, multiple-recording consisting of ten or more recording operations (holographic exposures) is preferably performed, more preferably 50 or more recording operations, most preferably 100 or more recording operations. Furthermore, for simplification of the recording system, improvement of S/N ratio, and the like, multiple-recording can be preferably performed with a constant exposure (a common exposure amount) for any number of recording operations in multiple-recording.

Meanwhile, the hologram recording material of the invention is preferably stored in a light-shielding cartridge during a storage period.

In addition, the hologram recording material of the invention also preferably includes a light-shielding filter capable of filtering out a part of ultraviolet, visible, and infrared wavelength region other than the wavelength of a recording light and a reproducing light on the surface of the hologram reading material, the back surface thereof, or both.

When the hologram recording material of the invention is employed as an optical recording medium, the optical recording medium may be of an arbitrary shape, such as a disk, a card, or a tape.

The hologram recording material of the invention can be preferably adopted to a three-dimensional display (imaging) hologram; an optical element recording medium (holographic memory)—particularly ROM optical recording medium—a holographic optical element (HOE; e.g., an on-vehicle head up display (HUD), a pickup lens for an optical disk, a head mount display, a color filter for liquid crystal, a reflection-type liquid crystal reflector, a lens, a diffraction grating, an interference filter, a coupler for optical fiber, a polariscope for facsimile, or a window glass for construction); a cover of a book, magazine, or the like; a display such as a POP (point of purchase advertising); a keepsake; a credit card, for providing security against counterfeiting; a banknote; a wrapping material; and the like.

Examples

Examples of the invention will be described below in detail on the basis of results of an experiment. As a matter of course, the invention is not limited to these examples.

(Example 1)

(Hologram Recording Material Making Use of Silver Halide and Refractive index-modulating Coupler)

A substrate was obtained by means of coating opposite faces of paper with polyethylene. The surface of the substrate was subjected to corona discharge treatment, followed by formation of a gelatin undercoating layer containing sodium dodecylbenzenesulfonate thereon. Subsequently, a hologram material sample 101 described below was prepared. A coating solution was prepared as follows.

(Preparation of Coating Sohrtion)

(Preparation of Coupler Dispersion)

Into 350 mL of ethyl butyrate containing 230 g of solvent (Solv-5), 570 g of a refractive index-modulating coupler C-2 (sample 1) was dissolved, and this solution was dispersed in an emulsifying manner in 12,500 g of 10% gelatin aqueous solution containing 25 g of sodium dodecylbenzenesulfonate, thereby preparing an emulsified dispersion.

(Preparation of Silver Halide Emulsion)

1,660 mL of an aqueous solution containing 0.28 g of KBr and 33.3 g of phthalated gelatin having an average

molecular weight of 100,000 was stirred while temperature was maintained at 30°C. After addition of 0.04 g of thiourea dioxide, the pH of the mixture was adjusted to 6.0. 800 mL of an aqueous solution containing $AgNO_3$ (96.0 g) and an aqueous solution of KBr containing 3 mol % of KI were added into the mixture by means of double-jet method over a period of ten minutes. At this time, the silver potential was maintained at +20 mV with respect to a saturated calomel electrode. The temperature of the mixture was lowered to 28°C, and thereafter the mixture was subjected to normal water washing. Into the mixture, 21 g of deionized ossein gelatin having an average molecular weight of 100,000 was added, and thereafter the pH of the mixture was adjusted to 6.0 at 40°C. Subsequently, sensitizing dyes I and II, in a molar ratio of 40:60, were added into the mixture in an amount of $1 \times 10^{-4}$ mol per mol of silver halide. Each of the sensitizing dyes employed in the example was used in the form of a solid fine dispersion prepared in accordance with a method described in JP-A-11-52507. More specifically, 0.8 part by weight of sodium nitrate and 3.2 parts by weight of sodium sulfate were dissolved in 43 parts by weight of ion-exchanged water; into the mixture, 13 parts by weight of the sensitizing dye was added, and dispersed with use of a dissolver blade at 2,000 rpm for 20 minutes at 60°C, thereby obtaining a solid dispersion of the sensitizing dye.

The mixture was heated to 60°C, and chloroauric acid ($5.5 \times 10^{-4}$ mol), potassium rhodanide ($5 \times 10^{-4}$ mol), sodium hyposulfite ($7.2 \times 10^{-4}$ mol), and N,N-dimethylselenourea ($4.8 \times 10^{-4}$ mol) were added per mol of silver halide, thereby effecting chemical sensitization in an optimum manner. An antifoggant I ($1.0 \times 10^{-3}$ mol) was added to the mixture, thereby completing the chemical sensitization.

The thus-obtained emulsion "a" was formed from rounded cubic grains whose number-average equivalent circular diameter was 30 nm, and variation coefficient of the equivalent circular diameter was 16%. The grains are silver bromide grains containing 3 mol % of silver iodide, wherein a variation coefficient of inter-grain distribution of the silver bromide content is 12%.

SENSITIZING DYE I

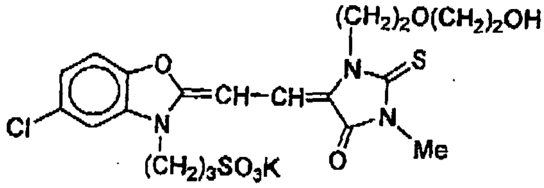

SENSITIZING DYE II

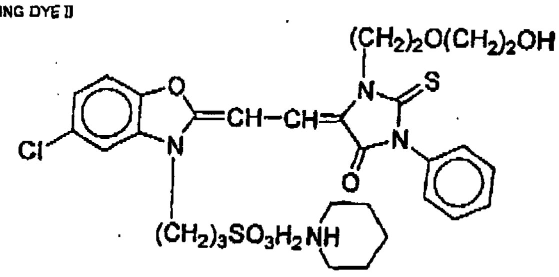

ANTIFOGGANT I

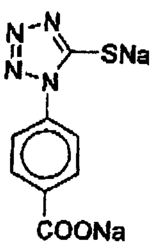

The emulsion dispersion and the emulsion "a" were mixed. Into the mixture, low-molecular-weight gelatin having a number-average molecular weight was 25,000 was added and dissolved, thereby obtaining a coating solution. This coating solution was applied onto the substrate. The coating was 20μm in thickness.

The hologram material sample 101 was subjected to recording by exposure to a two-light optical system for transmission hologram recording illustrated in Fig. 3, with use of a second harmonic of a YAG laser (532 nm) as a light source. The angle formed by the object light and the reference light was 30°. The light had a diameter of 0.6 cm and an

intensity of 1 μW/cm$^2$. During exposure, the holographic exposure time was varied within a range of 5 to 100 seconds (within a range of 5 to 100 μJ/cm$^2$ in radiation energy) at intervals of 5 seconds. The thus-exposed hologram recording material was subjected to the following processing steps. Thereafter, only the reference light of the YAG laser light of 532 nm was radiated on the hologram recording material, and the diffraction efficiency (relative diffraction efficiency, or diffracted light/transmitted light) was measured.

(Processing Steps)

| Processing Steps | Temperature | Period of Time |
|---|---|---|
| Color Development | 38.5°C | 45 seconds |
| Bleach-Fixing | 38.0°C | 45 seconds |
| Water Washing | 38.0°C | 10 seconds |
| Drying | 80°C | |

Compositions of the respective processing solutions are as follows.

(Color Developing Solution)

| | |
|---|---|
| Water | 800 mL |
| Triisopropanolamine | 8.8 g |
| Ethylenediaminetetraacetic acid | 4.0 g |
| Sodium sulfite | 0.10 g |
| Potassium chloride | 10.0 g |
| Sodium 4,5-dihydroxybenzene-1,3-disulfonate | 0.50 g |
| Disodium-N,N-bis(su1fonatethyl)hydroXylanrine | 8.5 g |
| 4-amino-3-methyl-N-ethyl-N-(β-methanesulfonamidoethyl)aniline sesquisulfate, monohydrate | 4.8 g |
| Potassium carbonate | 26.3 g |
| Additional water to make | 1,000 mL |
| pH (25°C, adjusted with sulfate and KOH) | 10.15 |

(Bleach-Fixing Solution)

| | |
|---|---|
| Water | 400 mL |
| Ammonium thiosulfate (750 g/mL) | 110 mL |
| EthylIron (III) ammonium ethylenediaminetetraacetate | 42 g |
| Ethylenediaminetetraacetic acid | 5 g |
| Ammonium sulfate | 12 g |
| Imidazole | 10 g |
| Ethylenediaminetetraacetic acid | 9.0 g |
| Ammonium sulfite | 45 g |
| m-carboxybenzenesulfinic acid | 8 g |
| Additional water to make | 1,000 mL |
| pH (25°C, adjusted with nitric acid and ammonium water) | 6.50 |

Samples 102 and 103 were prepared by means of changing only the refractive index-modulating coupler C-2 of the sample 101 to C-3 (for the sample 102) and C-9 (for the sample 103).

Meanwhile, a bleached silver halide hologram recording material of sample 7 described in JP-A-10-149083 was employed as a comparative example.

(Evaluations)

Table 1 shows results of evaluations of the hologram recording materials 101 to 103 and the comparative examples about maximum diffraction efficiency and sensitivity (half the exposure where the maximum diffraction efficiency is obtained).

In addition, Table 1 also shows maximum diffraction efficiency for the case where each of the hologram recording materials was stored for two weeks under a fluorescent lamp.

Table 1

| Sample | Maximum Diffraction Efficiency η | Sensitivity | Diffraction Efficiency After Irradiation with Fluorescent Lamp for Two Weeks |
|---|---|---|---|
| 101 | 86% | 30 $\mu J/cm^2$ | 86% |
| 102 | 84% | 30 $\mu J/cm^2$ | 84% |
| 103 | 84% | 35 $\mu J/cm^2$ | 83% |
| Compamtive Example | 55% | 40 $\mu J/cm^2$ | 40% |

Table 1 shows that, although the known bleached silver halogen type of the comparative example—described in JP-A-10-149083—exhibits high sensitivity, the diffraction efficiency of the same is low. Furthermore, since the comparative example utilizes its silver halide for refractive index modulation, sensitization by irradiation of light occurs even after a development process. Therefore, the comparative example is degraded in diffraction efficiency, and poor in optical storage stability.

In contrast, the hologram recording material of the invention exhibits high sensitivity and high diffraction efficiency, and has favorable optical storage stability, thereby being preferable.

The reason therefor is that the hologram recording material of the invention employs a quite new recording method. According to the method, a silver halide is sensitized in accordance with interference fringes through holographic exposure, to thus form a latent image. The sensitized silver halide is subjected to a development process, thereby developing the sensitized silver. As a result, an organic refractive index-modulating agent is caused to react, and the interference fringes are recorded by means of refractive index modulation. Silver, present in a hologram recording material, is bleached during or after development process. The hologram recording material and a remaining silver halide are further desilvered and recovered into a processing solution.

Table 1 also indicates that $\Delta n$ (calculated on the basis of the Kogelnik's equation from refractive index modulation, diffraction efficiency, and thickness of the interference fringes) of the each of the hologram recording materials 101 to 103 of the invention increases substantially linearly in accordance with the exposure ($\mu J/cm^2$) within an exposure range of 0 to 60 $\mu J/cm^2$, which is advantageous for muitiple-recording.

The hologram recording material of the invention was subjected to a multiplex hologram recording constituted of five recordings. The respective recording operations were performed at the same position, with an exposure of one-fifth the exposure at which the maximum diffraction efficiency was obtained for each recording operation while the angle of the reference light was changed in increments of 4°. Thereafter, the reproduction light was radiated while the angle of the reproduction light was changed in increments of 4°. As a result, the respective object lights were confirmed to be able to be reproduced. More specifically, the hologram recording material of the present invention is capable of multiplex recording with a fixed exposure, to thus be suitable for multiple-recording. As described above, the hologram recording material of the invention can perform multiple-recording consisting of a large number of recording operations, thereby being capable of high density (capacity) recording when the material is utilized in optical recording media, such as ROM.

It will be apparent to those skilled in the art that various modifications and variations can be made to the described embodiments of the invention without departing from the spirit or scope of the invention. Thus, it is intended that the invention cover all modifications and variations of this invention consistent with the scope of the appended claims and their equivalents.

The present application claims foreign priority based on Japanese Patent Application Nos. JP2005-37881 and JP2005-270278, filed February 15 and September 16 of 2005, respectively, the contents of which are incorporated herein by reference.

## Claims

1. A hologram recording material comprising: a silver halide; an organic agent modulating a refractive index of the hologram recording material; and a binder.

2. The hologram recording material according to claim 1, wherein the organic agent is one of:

a coupler capable of modulating a refractive index thereof by means of a coupling reaction with an oxidized form of a developing agent during a development process;
a compound-releasing agent capable of releasing one of a high refractive index compound and a low refractive index compound during a development process;
a polymerizable compound capable of undergoing polymerization during a development process to modulate a refractive index thereof, and
a bubble-generating agent capable of generating bubbles during a development process.

3. The hologram recording material according to claim 2, wherein the coupler is a compound represented by formula (1-1) or (1-2):

Formual (1-1)

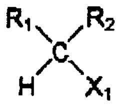

Formula (1-2)

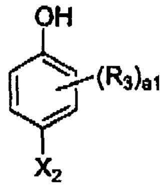

wherein $R_1$ and $R_2$ each independently represents a substituent; $R_1$ and $R_2$ may be linked together to form a ring; and $X_1$ represents a hydrogen atom or a leaving group which can depart as an anion upon coupling reaction with an oxidized form of a developing agent, and
$R_3$ represents a substituent; al represents an integer from 0 to 4; when a1 is 2 or larger, a plurality of $R_3$'s are the same or different from each other and may be linked together to form a ring; and $X_2$ represents a hydrogen atom or a leaving group which can depart as an anion upon coupling reaction with an oxidized form of a developing agent.

4. The hologram recording material according to claim 2, wherein the organic agent is the coupler, and the coupling reaction produces a compound exhibiting no absorption on a hologram recording wavelength.

5. The hologram recording material according to claim 3, wherein the leaving group $X_1$ is a group including a fluorine atom.

6. The hologram recording material according to claim 3, wherein the leaving group $X_2$ is a group including a fluorine atom.

7. The hologram recording material according to claim 2, wherein the organic agent is the compound-releasing agent, and the compound-releasing agent is represented by one of formulae (2-1), (2-2) and (2-3):

Formula (2-1)

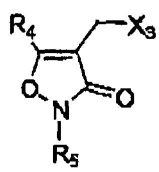

Formula (2-2)

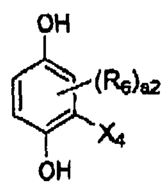

Formula (2-3)

$$X_5\text{-}(CR_7{=}CR_8)_{a3}\text{-}NHSO_2\text{-}X_6$$

wherein $R_4$ represents an alkyl group, an alkenyl group, a cycloalkyl group, an aryl group, or a heterocyclic group; $R_5$ represents an aryl group, or a heterocyclic group; and $X_3$ represents a releasing group to be released during the developing process,
$R_6$ represents a substituent; a2 is an integer from 0 to 3; when a2 is 2 or larger, a plurality of $R_6$'s are the same or different from each other and may be linked together to form a ring; and $X_4$ represents a releasing group to be released during said developing process, and
$X_5$ and $X_6$ each independently represents an -OH group or an $-NHR_{16}$ group, wherein $R_{16}$ represents a hydrogen

atom, an alkyl group, an alkenyl group, a cycloalkyl group, an aryl group, or a heterocyclic group; $X_6$ represents a substituent and $X_6$-$SO_2NH_2$ is released during the developing process; $R_7$ and $R_8$ each represents a hydrogen atom or a substituent; $R_7$ and $R_8$ may be linked together to form a ring; and a3 is an integer from 0 to 5; and when a3 is 2 or larger, a plurality of $R_7$'s are the same of different from each other and a plurality of $R_8$'s are the same or different from each other.

**8.** The hologram recording material according to claim 2, wherein the organic agent is the polymerizable compound, and the polymerizable compound can modulate a refractive index thereof so that the refractive index modulated differs from that of a binder to form interference fringes in the hologram recording material.

**9.** The hologram recording material according to claim 8, further comprising a polymerization initiator.

**10.** The hologram recording material according to claim 2, wherein the organic agent is the bubble-generating agent, and the bubble-generating agent generate at least one gas selected from the group consisting of $N_2$, $CO_2$, $SO_2$, $SO_3$, $NO_2$, $O_2$ and i-$C_4H_8$.

**11.** The hologram recording material according to claim 2, wherein the bubble-generating agent is a compound represented by one of formulae (3-1) and (3-2):

Formual (3-1)

$$R_{13}-G-R_{14}$$

Formula (3-2)

$$R_{15}-N\equiv\overset{+}{N} \qquad X_{11}^{-}$$

wherein $R_{13}$ and $R_{14}$ each independently represents a hydrogen atom or a substituent; G represents -N=N-, -C(O)-, -OC(O)-, -OS(O)-, -$S(O)_z$-, or -$OS(O)_2$-; and $R_{13}$ and $R_{14}$ may be linked together to form a ring; and $R_{15}$ represents an aryl group or a heterocyclic group; and $X_{11}^-$ represents an anion.

**12.** The hologram recording material according to claim 1, wherein the silver halide is subjected to visible-light-spectral sensitization through adsorption of a sensitizing dye.

**13.** The hologram recording material according to claim 1, wherein the silver halide has a number-average equivalent circular diameter of 10 to 80 nm.

**14.** A method for recording a hologram in a hologram recording material according to claim 1, comprising:

sensitizing the silver halide in accordance with interference fringes caused by holographic exposure, to form a latent image; and
subjecting the hologram recording material to a development process so that the organic agent modulates a refractive index thereof by developing the silver halide sensitized, to form the interference fringes.

**15.** The method for recording a hologram according to claim 14, further comprising:

bleaching silver developed and present in the hologram recording material during or after the development process;
desilvering the hologram recording material to recover the sliver together with the silver halide, which is remained in the hologram recording material, into a processing solution.

**16.** A method for recording a hologram in a hologram recording material according to claim 1, comprising performing a multiple-recording by subjecting the hologram recording material to holographic exposure ten times or more.

**17.** The method for recording a hologram according to claim 16, wherein the multiple-recording is performed under a common exposure amount in each holographic exposure.

**18.** The hologram recording material according to claim 1, which is for an optical recording medium.

**19.** The hologram recording material according to claim 18, wherein the optical recording medium is a ROM optical

recording medium.

**20.** The hologram recording material according to claim 18, which is stored in a light-shielding cartridge during a storage period.

**21.** The holographic recording material according to claim 1, which is for producing a three-dimensional display hologram.

**22.** The holographic recording material according to claim 1, which is for a holographic optical element.

FIG. 1

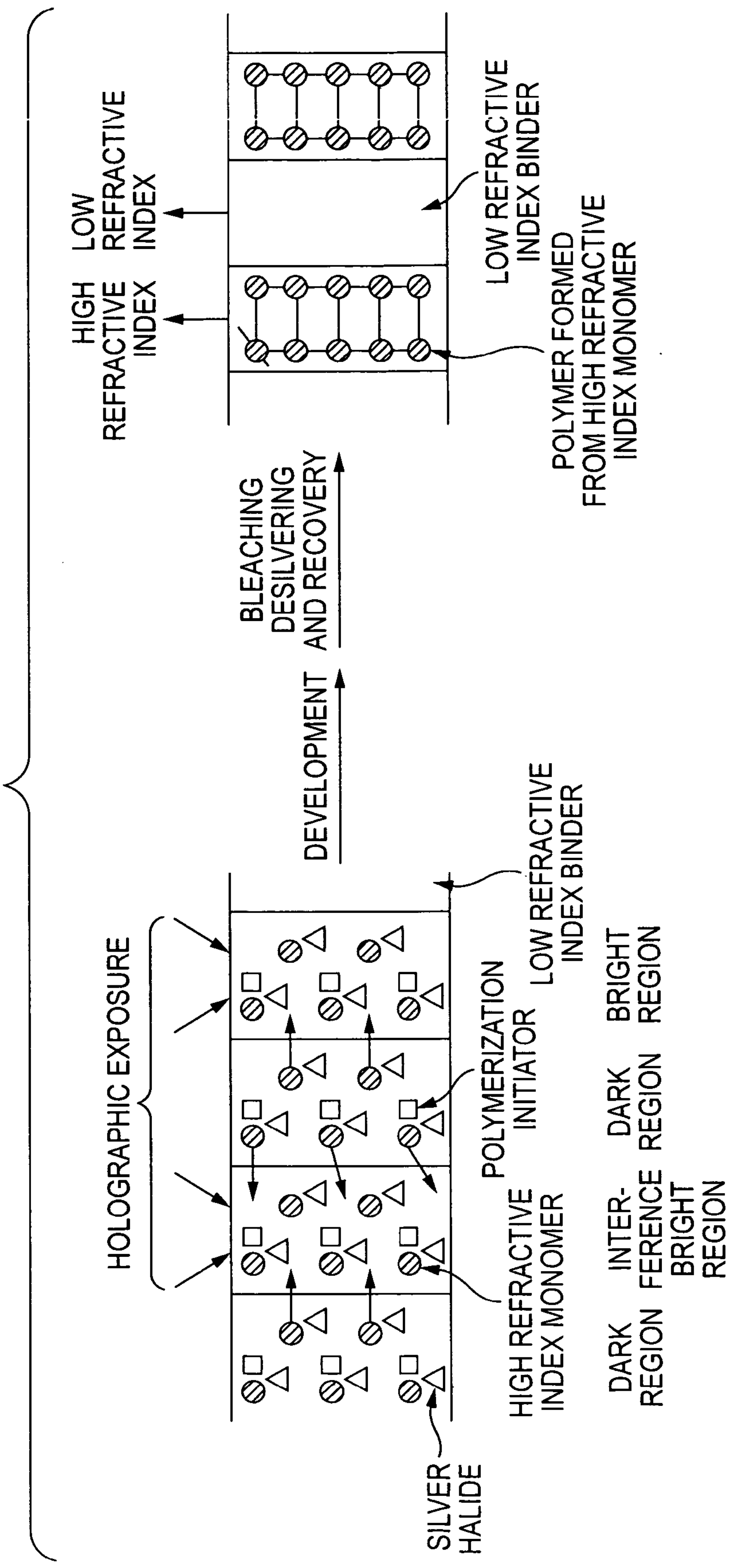
HOLOGRAPHIC EXPOSURE
SILVER HALIDE
HIGH REFRACTIVE INDEX MONOMER
POLYMERIZATION INITIATOR
LOW REFRACTIVE INDEX BINDER
DARK REGION
INTER-FERENCE BRIGHT REGION
DARK REGION
BRIGHT REGION
DEVELOPMENT
BLEACHING DESILVERING AND RECOVERY
HIGH REFRACTIVE INDEX
LOW REFRACTIVE INDEX
POLYMER FORMED FROM HIGH REFRACTIVE INDEX MONOMER
LOW REFRACTIVE INDEX BINDER

FIG. 2

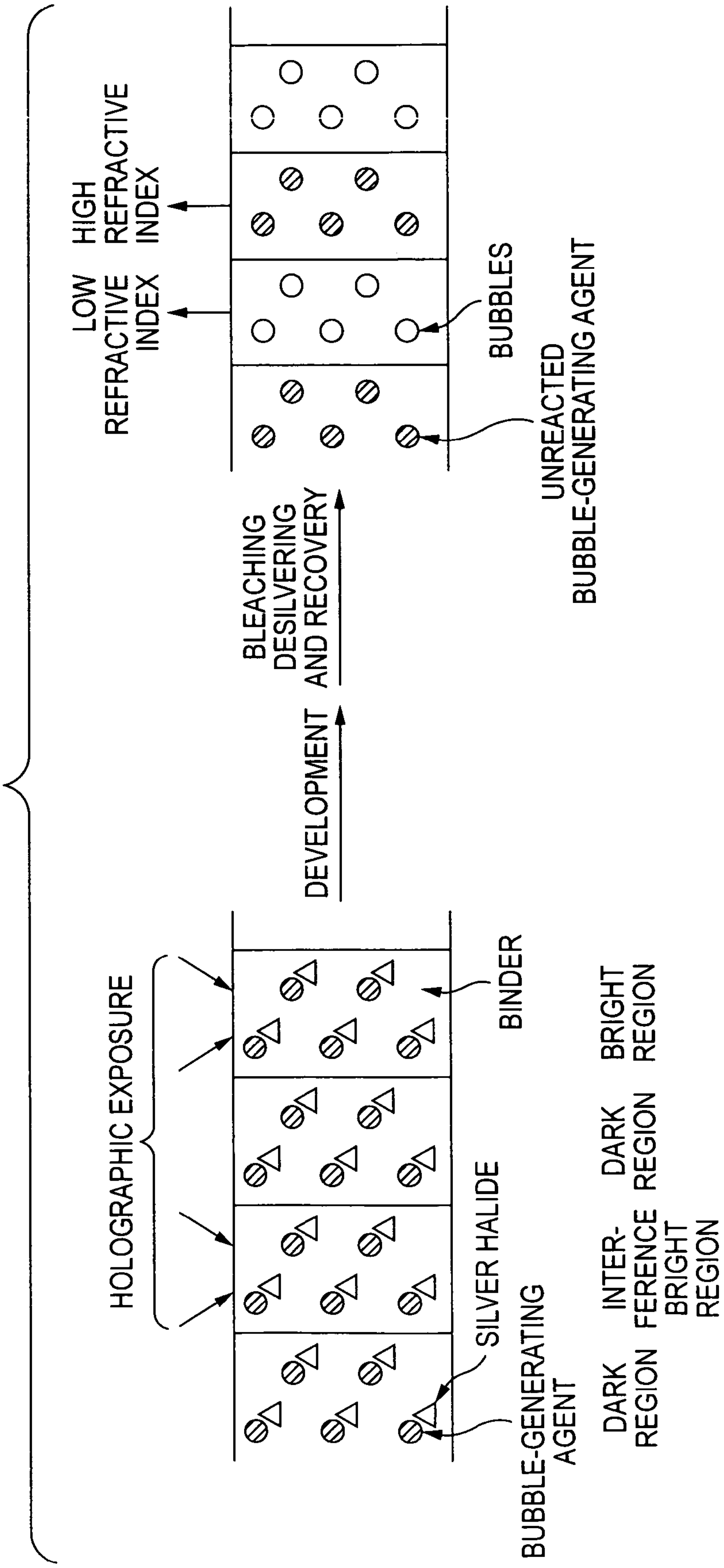
HOLOGRAPHIC EXPOSURE
SILVER HALIDE
BUBBLE-GENERATING AGENT
BINDER
DARK REGION
INTER-FERENCE BRIGHT REGION
DARK REGION
BRIGHT REGION
DEVELOPMENT
BLEACHING DESILVERING AND RECOVERY
LOW REFRACTIVE INDEX
HIGH REFRACTIVE INDEX
BUBBLES
UNREACTED BUBBLE-GENERATING AGENT

FIG. 3